# EUROPEAN PATENT SPECIFICATION

(11) **EP 3 392 784 B1**
(45) Date of publication and mention of the grant of the patent: **15.12.2021**
(21) Application number: 16884377.9
(22) Date of filing: 14.01.2016
(51) Int. Cl.: H04L 12/24, G06F 16/23

(54) **METHOD AND SYSTEM FOR MANAGING RESOURCE OBJECTS**
VERFAHREN UND SYSTEM ZUR VERWALTUNG VON RESSOURCENOBJEKTEN
PROCÉDÉ ET SYSTÈME DE GESTION D'OBJETS DE RESSOURCES

(43) Date of publication of application: 24.10.2018
(73) Proprietor: Huawei Technologies Co., Ltd., Longgang District Shenzhen, Guangdong 518129 (CN)
(72) Inventor: HU, Yongjian, Shenzhen Guangdong 518129 (CN); ZHANG, Xubao, Shenzhen Guangdong 518129 (CN); LIU, Kai, Shenzhen Guangdong 518129 (CN); YANG, Yang, Shenzhen Guangdong 518129 (CN); YU, Liang, Shenzhen Guangdong 518129 (CN)
(74) Representative: Maiwald Patent- und Rechtsanwaltsgesellschaft mbH
(86) International application number: PCT/CN2016/070893
(87) International publication number: WO 2017/120814

(56) References cited:
- WO-A1-2011/049553
- WO-A1-2015/102008
- WO-A1-2015/156832
- CN-A- 101 114 328
- CN-A- 101 488 903
- CN-A- 104 363 159
- US-A1- 2015 100 560
- US-A1- 2015 163 314
- Wouter Tavernier ET AL: "UNIFY unifying cloud and carrier networks D3.1 Programmability framework version 1.0", , 14 November 2014 (2014-11-14), pages 1-203, XP055224703, Retrieved from the Internet: URL:https://www.eict.de/fileadmin/redakteu re/Projekte/Unify/Deliverables/UNIFY-D3.1- Programmability_framework.pdf [retrieved on 2018-10-19]
- ZATTI S ED - MONACO V A ET AL: "NAMING IN OSI: DISTINGUISHED NAMES OR OBJECT INDENTIFIERS?", ADVANCED COMPUTER TECHNOLOGY, RELIABLE SYSTEMS AND APPLICATIONS. BOLOGNA, MAY 13 - 16, 1991; [PROCEEDINGS OF THE ANNUAL EUROPEAN COMPUTER CONFERENCE. (COMPEURO)], LOS ALAMITOS, IEEE. COMP. SOC. PRESS, US, vol. CONF. 5, 13 May 1991 (1991-05-13), pages 258-262, XP000252701,
- WAHL M ET AL: "RFC 2253 - Lightweight Directory Access Protocol (v3): UTF-8 String Representation of Distinguished Names", NETWORK WORKING GROUP REQUEST FOR COMMENTS, XX, XX, vol. 2253, 1 December 1997 (1997-12-01), pages 1-9, XP002314330,
- "SDN architecture Issue 1.1 (draft PA8) 2015", 3GPP DRAFT; ARCHR1.1 PA8, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 6 December 2015 (2015-12-06), XP051058753, Retrieved from the Internet: URL:http://www.3gpp.org/ftp/Meetings_3GPP_ SYNC/SA/Docs/ [retrieved on 2015-12-06]
- PFAFF B DAVIE B ET AL: "The Open vSwitch Database Management Protocol; rfc7047.txt", THE OPEN VSWITCH DATABASE MANAGEMENT PROTOCOL; RFC7047.TXT, INTERNET ENGINEERING TASK FORCE, IETF; STANDARD, INTERNET SOCIETY (ISOC) 4, RUE DES FALAISES CH- 1205 GENEVA, SWITZERLAND, 17 December 2013 (2013-12-17), pages 1-35, XP015096692, [retrieved on 2013-12-17]

## Description

### TECHNICAL FIELD

This application relates to the field of communications technologies, and in particular, to a method and a system for managing a resource object.

### BACKGROUND

In recent years, software-defined networking (SDN) whose value has been recognized by telecommunication network operators is an evolution direction of future networks. By means of an SDN technology, an SDN control plane and an SDN data plane of a network device are separated from each other, to implement flexible control on network traffic, and accelerate innovation of network services. For a current mainstream SDN control plane, universally unique identifiers (UUID) are used to identify resource objects, and can uniquely identify all resource objects in a distributed SDN system. In an existing network, an existing network system is of a vast scale, and there are also a large quantity of network management systems based on an existing network system and a large quantity of applications based on the network management systems. How to implement smooth evolution of an existing network system to a future-oriented SDN system, and reuse as much as possible an existing network management system and a large quantity of applications in the network management system to manage a resource object in an SDN system is a technical problem that currently exists. Publication "UNIFY unifying cloud and carrier networks D3.1 Programmability framework version 1.0", Wouter Tavernier, Sachin Sharma et al, published 2014-11-14, relates to a service programmability framework which details process flows, interfaces, information models and orchestration functionality in support of service programming for a network comprising SDN nodes. It discloses an Orchestrator creating an instantiable Network Function-Forwarding Graph (NF-NG) which assigns infrastructure resources to each NF-NG component, such that in particular individual deployable VNFs will be given Universally Unique IDentifiers (UUIDs), and will be mapped to infrastructure able to instantiate such VNF. Additionally D1 discloses a Service Layer responsible to map a Service Graph to NF-FG and this mapping (SG->NF-FG) is stored in a special database. In the lowest Orchestration Layer the NF-FGs coming from the Service Layer is mapped to the resource topology.

### SUMMARY

In view of this, this application provides a method and an apparatus for managing a resource object in an SDN system, so that the resource object in the SDN system can be managed by slightly modifying a network management system in an existing network system and an application based on the network management system, thereby implementing smooth evolution of the existing network system to the SDN system.

Technical solutions provided in embodiments of this application are as follows:
According to a first aspect, a method for managing a resource object in an SDN system is provided according to claim 1.

In the foregoing technical solution, the resource object identifier mapping relationship table is created in the management system, to store a mapping relationship between a UUID of a resource object and an FDN identifier of the resource object, so that the resource object in the SDN system can be managed by using the application system by slightly modifying a network management system in an existing network system and an application based on the network management system, thereby implementing smooth evolution of the existing network system to the SDN system. Further, when a user manages a resource object by using a management interface of the application system, visual resource object information can be presented to the user by using the management interface by obtaining an FDN identifier of the resource object, for the user to query basic index information of the resource object.

With reference to the first aspect, or the first or the second possible implementation, in a third possible implementation, when the newly discovered resource object is a newly discovered physical resource object,
the obtaining a UUID of a newly discovered resource object specifically includes: newly discovering, by the management system, a physical resource object, and allocating, by the management system, a UUID to the newly discovered physical resource object;
the generating, by the management system, a corresponding FDN identifier for the newly discovered resource object specifically includes: generating, by the management system, a corresponding FDN identifier for the newly discovered physical resource object; and
the adding, by the management system, a mapping relationship between the UUID of the newly discovered resource object and the FDN identifier of the newly discovered resource object to the resource object identifier mapping relationship table specifically includes: adding, by the management system, a mapping relationship between the UUID of the newly discovered physical resource object and the FDN identifier of the newly discovered physical resource object to the resource object identifier mapping relationship table.

With reference to the first aspect, or the first or the second possible implementation, in a fourth possible implementation, when the newly discovered resource object is a physical resource object,
the obtaining a UUID of a newly discovered resource object specifically includes: obtaining, by the management system, a UUID of the newly discovered physical resource object from the control system;
the generating, by the management system, a corresponding FDN identifier for the newly discovered resource object specifically includes: generating, by the management system, a corresponding FDN identifier for the newly discovered physical resource object; and
the adding, by the management system, a mapping relationship between the UUID of the newly discovered resource object and the FDN identifier of the newly discovered resource object to the resource object identifier mapping relationship table specifically includes: adding, by the management system, a mapping relationship between the UUID of the newly discovered physical resource object and the FDN identifier of the newly discovered physical resource object to the resource object identifier mapping relationship table.

With reference to any one of the first aspect, or the first to the fifth possible implementations, in a sixth possible implementation, when the newly discovered resource object is a service resource object, the obtaining a UUID of a newly discovered resource object specifically includes: obtaining, by the management system, a UUID of the service resource object from the control system; and the generating, by the management system, a corresponding FDN identifier for the newly discovered resource object specifically includes: querying, by the management system, the control system for a corresponding service according to the UUID of the service resource object, and generating an FDN identifier for the service resource object according to a query result; and
the adding, by the management system, a mapping relationship between the UUID of the newly discovered resource object and the FDN identifier of the newly discovered resource object to the resource object identifier mapping relationship table specifically includes: adding, by the management system, a mapping relationship between the UUID of the service resource object and the FDN identifier of the service resource object to the resource object identifier mapping relationship table.

With reference to any one of the first to the sixth possible implementations, in a seventh possible implementation, the method may further include:
obtaining, by the management system, a UUID of the to-be-managed resource object according to the FDN identifier of the to-be-managed resource object and the resource object identifier mapping relationship table, and returning the UUID of the to-be-managed resource object to the application system, where the resource object identifier mapping relationship table includes a mapping relationship between the UUID of the to-be-managed resource object and the FDN identifier of the to-be-managed resource object; and
the UUID of the to-be-managed resource object is used by the application system to manage the to-be-managed resource object, which may specifically include: querying detailed information of the to-be-managed resource object, modifying detailed information of the to-be-managed resource object, or deleting detailed information of the to-be-managed resource object.

By means of this implementation, the user may further manage, for example, query, modify, or delete, detailed information of the resource object in the SDN system by using the application system and by using the FDN identifier, so as to strengthen management on a resource in the SDN system.

With reference to the seventh possible implementation, in an eighth possible implementation, before the obtaining, by the management system, a UUID of the to-be-managed resource object according to the FDN identifier of the to-be-managed resource object and the resource object identifier mapping relationship table, and returning the UUID of the to-be-managed resource object to the application system, the method further includes:
receiving, by the management system, a second query request sent by the application system, where the second query request is used to obtain the UUID of the to-be-managed resource object, and the second query request carries the FDN identifier of the to-be-managed resource object.

With reference to the seventh or the eighth possible implementation, in a ninth possible implementation, when the detailed information of the to-be-managed resource object that needs to be queried is detailed information of a to-be-managed service resource object, and the detailed information of the to-be-managed service resource object includes a physical resource object using a UUID and associated with the to-be-managed service resource object, the method further includes:
receiving, by the management system, a third query request sent by the application system, where the third query request carries the UUID of the physical resource object associated with the to-be-managed service resource object, and is used to obtain an FDN identifier of the physical resource object associated with the to-be-managed service resource object;
querying, by the management system, the resource object identifier mapping relationship table according to the UUID of the physical resource object associated with the to-be-managed service resource object, to obtain the FDN identifier of the physical resource object associated with the to-be-managed service resource object, where the resource object identifier mapping relationship table includes a mapping relationship between the UUID of the physical resource object associated with the to-be-managed service resource object and the FDN identifier of the physical resource object associated with the to-be-managed service resource object; and
returning, by the management system to the application system, the FDN identifier of the physical resource object associated with the to-be-managed service resource object.

With reference to any one of the first to the ninth possible implementations, in a tenth possible implementation, when the to-be-managed resource object is a physical resource object, the FDN identifier of the to-be-managed resource object that is obtained by the management system and returned to the application system is an FDN identifier of the to-be-managed physical resource object, and the method further includes:
receiving, by the management system, a fourth query request sent by the application system, where the fourth query request carries the FDN identifier of the to-be-managed physical resource object, and is used to query detailed information of the to-be-managed physical resource object;
querying, by the management system, the detailed information of the to-be-managed physical resource object by using the FDN identifier of the to-be-managed physical resource object; and
returning, by the management system, the detailed information of the to-be-managed physical resource object to the application system.

With reference to any one of the first to the tenth possible implementations, in an eleventh possible implementation, when the to-be-managed resource object is a physical resource object, the FDN identifier of the to-be-managed resource object that is obtained by the management system and returned to the application system is an FDN identifier of the to-be-managed physical resource object, and the method further includes:
receiving, by the management system, a physical resource object information modification request sent by the application system, where the physical resource object information modification request carries the FDN identifier of the to-be-managed physical resource object, and is used to modify detailed information of the to-be-managed physical resource object; and
modifying, by the management system, the detailed information of the to-be-managed physical resource object according to the physical resource object information modification request.

With reference to any one of the first to the eleventh possible implementations, in a twelfth possible implementation, when the to-be-managed resource object is a physical resource object, the FDN identifier of the to-be-managed resource object that is obtained by the management system and returned to the application system is an FDN identifier of the to-be-managed physical resource object, and the method further includes:
receiving, by the management system, a physical resource object information deletion request sent by the application system, where the physical resource object information deletion request carries the FDN identifier of the to-be-managed physical resource object, and is used to delete detailed information of the to-be-managed physical resource object; and
deleting, by the management system, the detailed information of the to-be-managed physical resource object according to the physical resource object information deletion request.

With reference to any one of the seventh to the twelfth possible implementations, in a thirteenth possible implementation, when the to-be-managed resource object is a physical resource object, the UUID of the to-be-managed resource object that is returned by the management system to the application system is a UUID of the to-be-managed physical resource object, and the method further includes:
receiving, by the management system, a fifth query request sent by the application system, where the fifth query request carries the UUID of the to-be-managed physical resource object, and is used to query detailed information of the to-be-managed physical resource object;
querying, by the management system, the detailed information of the to-be-managed physical resource object by using the UUID of the to-be-managed physical resource object; and
returning, by the management system, the detailed information of the to-be-managed physical resource object to the application system.

With reference to any one of the seventh to the thirteenth possible implementations, in a fourteenth possible implementation, when the to-be-managed resource object is a physical resource object, the UUID of the to-be-managed resource object that is returned by the management system to the application system is a UUID of the to-be-managed physical resource object, and the method further includes:
receiving, by the management system, a physical resource object information modification request sent by the application system, where the physical resource object information modification request carries the UUID of the to-be-managed physical resource object, and is used to modify detailed information of the to-be-managed physical resource object;
querying, by the management system, the detailed information of the to-be-managed physical resource object by using the UUID of the to-be-managed physical resource object; and
modifying, by the management system, the detailed information of the to-be-managed physical resource object according to the physical resource object information modification request.

With reference to any one of the seventh to the fourteenth possible implementations, in a fifteenth possible implementation, when the to-be-managed resource object is a physical resource object, the UUID of the to-be-managed resource object that is returned by the management system to the application system is a UUID of the to-be-managed physical resource object, and the method further includes:
receiving, by the management system, a physical resource object information deletion request sent by the application system, where the physical resource object information modification request carries the UUID of the to-be-managed physical resource object, and is used to delete detailed information of the to-be-managed physical resource object; and
deleting, by the management system, the detailed information of the to-be-managed physical resource object according to the physical resource object information deletion request.

According to a second aspect, a method for managing a resource object in an SDN system is provided according to claim 5.

With reference to the second aspect, in a first possible implementation, the method may further include:
receiving, by the application system, a UUID of the to-be-managed resource object that is obtained according to the FDN identifier of the to-be-managed resource object and the resource object identifier mapping relationship table and that is returned by the management system, where a mapping relationship between the UUID of the to-be-managed resource object and the FDN identifier of the to-be-managed resource object is stored and included in the resource object identifier mapping relationship table; and
the UUID of the to-be-managed resource object is used by the application system to manage the to-be-managed resource object, which may specifically include: querying detailed information of the to-be-managed resource object, modifying detailed information of the to-be-managed resource object, or deleting detailed information of the to-be-managed resource object.

By means of this implementation, the user may further manage, for example, query, modify, or delete (refer to the following implementations), detailed information of the resource object in the SDN system by using the application system and by using the FDN identifier of the to-be-managed resource object, so as to strengthen management on a resource in the SDN system.

With reference to the first possible implementation, in a second possible implementation, before the receiving, by the application system, a UUID of the to-be-managed resource object that is obtained according to the FDN identifier of the to-be-managed resource object and the resource object identifier mapping relationship table and that is returned by the management system, the method further includes:
sending, by the application system, a second query request to the management system, where the second query request carries the FDN identifier of the to-be-managed resource object, and is used to obtain the UUID of the to-be-managed resource object.

With reference to the second aspect, or the first or the second possible implementation, in a third possible implementation, when the to-be-managed resource object is a to-be-managed service resource object,
the first query request sent by the application system to the management system is used to obtain an FDN identifier of the to-be-managed service resource object; and
the application system receives the FDN identifier of the to-be-managed service resource object that is returned by the management system.

With reference to the second or the third possible implementation, in a fourth possible implementation, when the to-be-managed resource object is a to-be-managed service resource object,
the managing, by the application system, the to-be-managed resource object by using the FDN identifier of the to-be-managed resource object specifically includes:
sending, by the application system, a second query request to the management system, where the second query request is used to obtain a UUID of the to-be-managed service resource object, and the second query request carries an FDN identifier of the to-be-managed service resource object; and
receiving, by the application system, the UUID of the to-be-managed service resource object that is found according to the resource object identifier mapping relationship table and that is returned by the management system, where
the UUID of the to-be-managed service resource object is used by the application system to manage detailed information of the to-be-managed service resource object, which may specifically include: querying the detailed information of the to-be-managed service resource object, modifying the detailed information of the to-be-managed service resource object, or deleting the detailed information of the to-be-managed resource object.

With reference to any one of the first to the fourth possible implementations, in a fifth possible implementation, the managing, by the application system, the to-be-managed resource object by using the FDN identifier of the to-be-managed resource object specifically includes:
sending, by the application system, a sixth query request for a resource object to the control system, where the sixth query request carries the UUID of the to-be-managed service resource object, to query the detailed information of the to-be-managed service resource object; and receiving, by the application system, the detailed information of the to-be-managed service resource object that is returned by the control system.

With reference to fifth possible implementation, in a sixth possible implementation, when the detailed information of the to-be-managed service resource object includes a physical resource object using a UUID and associated with the to-be-managed service resource object, the method further includes:
sending, by the application system, a third query request to the management system, where the third query request carries the UUID of the physical resource object associated with the to-be-managed service resource object, and is used to obtain an FDN identifier of the physical resource object associated with the to-be-managed service resource object; and
receiving, by the application system, the FDN identifier of the physical resource object associated with the to-be-managed service resource object that is found according to the resource object identifier mapping relationship table and that is returned by the management system.

With reference to any one of the first to the sixth possible implementations, in a seventh possible implementation, the managing, by the application system, the to-be-managed resource object by using the FDN identifier of the to-be-managed resource object specifically includes:
sending, by the application system, a service resource object information modification request to the control system, where the service resource object information modification request carries the UUID of the to-be-managed service resource object, to modify detailed information of the to-be-managed service resource object.

With reference to any one of the first to the seventh possible implementations, in an eighth possible implementation, the managing, by the application system, the to-be-managed resource object by using the FDN identifier of the to-be-managed resource object specifically includes:
sending, by the application system, a service resource object information deletion request to the control system, where the service resource object information deletion request carries the UUID of the to-be-managed service resource object, to delete detailed information of the to-be-managed service resource object.

With reference to any one of the second aspect, or the first to the eighth possible implementations, in a ninth possible implementation, when the to-be-managed resource object is a physical resource object,
the first query request sent by the application system to the management system is used to obtain an FDN identifier of the to-be-managed physical resource object; and
the application system receives the FDN identifier of the to-be-managed physical resource object that is returned by the management system.

With reference to any one of the second aspect, or the first to the ninth possible implementations, in a tenth possible implementation, the managing, by the application system, the to-be-managed resource object by using the FDN identifier of the to-be-managed resource object specifically includes:
sending, by the application system, a fourth query request to the management system, where the fourth query request carries the FDN identifier of the to-be-managed physical resource object, and is used to query detailed information of the to-be-managed physical resource object; and
receiving, by the application system, the detailed information of the to-be-managed physical resource object that is returned by the management system.

With reference to any one of the second aspect, or the first to the tenth possible implementations, in an eleventh possible implementation, the managing, by the application system, the to-be-managed resource object by using the FDN identifier of the to-be-managed resource object specifically includes:
sending, by the application system, a physical resource object information modification request to the management system, where the physical resource object information modification request carries the FDN identifier of the to-be-managed physical resource object, and is used to modify the detailed information of the to-be-managed physical resource object.

With reference to any one of the second aspect, or the first to the eleventh possible implementations, in a twelfth possible implementation, the managing, by the application system, the to-be-managed resource object by using the FDN identifier of the to-be-managed resource object specifically includes:
sending a physical resource object information deletion request, where the physical resource object information deletion request carries the FDN identifier of the to-be-managed physical resource object, and is used to delete the detailed information of the to-be-managed physical resource object.

With reference to any one of the first to the twelfth possible implementations, in a thirteenth possible implementation, the method further includes:
sending, by the application system, a second query request to the management system, where the second query request is used to obtain a UUID of the to-be-managed physical resource object, and the second query request carries the FDN identifier of the to-be-managed physical resource object; and
receiving, by the application system, the UUID of the to-be-managed physical resource object that is found according to the resource object identifier mapping relationship table and that is returned by the management system.

With reference to any one of the first to the thirteenth possible implementations, in a fourteenth possible implementation, the method further includes:
sending, by the application system, a fifth query request to the management system, where the fifth query request carries the UUID of the to-be-managed physical resource object, and is used to query the detailed information of the to-be-managed physical resource object; and
receiving, by the application system, the detailed information of the to-be-managed physical resource object that is obtained by using the UUID of the to-be-managed physical resource object and that is returned by the management system.

With reference to any one of the first to the fourteenth possible implementations, in a fifteenth possible implementation, the managing, by the application system, the to-be-managed resource object by using the FDN identifier of the to-be-managed resource object specifically includes:
sending, by the application system, a physical resource object information modification request to the management system, where the physical resource object information modification request carries the UUID of the to-be-managed physical resource object, and is used to modify the detailed information of the to-be-managed physical resource object.

With reference to any one of the first to the fifteenth possible implementations, in a sixteenth possible implementation, the managing, by the application system, the to-be-managed resource object by using the FDN identifier of the to-be-managed resource object specifically includes:
sending, by the application system, a physical resource object information deletion request to the management system, where the physical resource object information deletion request carries the UUID of the to-be-managed physical resource object, and is used to delete the detailed information of the to-be-managed physical resource object.

According to a third aspect, a management system for managing a resource object in an SDN system is provided according to claim 9.

With reference to the third aspect, in a first possible implementation,
the receiving unit is configured to receive a first query request for a to-be-managed resource object that is sent by the application system, where the first query request includes basic information of the to-be-managed resource object, and the first query request is used to obtain an FDN identifier of the to-be-managed resource object;
the processing unit is further configured to obtain the FDN identifier of the to-be-managed resource object according to the basic information of the to-be-managed resource object; and
the sending unit is configured to return the FDN identifier of the to-be-managed resource object to the application system.

In the foregoing technical solution, the resource object identifier mapping relationship table is created in the management system, to store a mapping relationship between a UUID of a resource object and an FDN identifier of the resource object, so that the resource object in the SDN system can be managed by using the application system by slightly modifying a network management system in an existing network system and an application based on the network management system, thereby implementing smooth evolution of the existing network system to the SDN system. Further, when a user manages a resource object by using a management interface of the application system, visual resource object information can be presented to the user by using the management interface by obtaining an FDN identifier of the resource object, for the user to query basic index information of the resource object.

With reference to the third aspect, in a second possible implementation, when the newly discovered resource object is a newly discovered physical resource object,
the processing unit is configured to: allocate a UUID to the newly discovered physical resource object, generate a corresponding FDN identifier for the newly discovered physical resource object, and add a mapping relationship between the UUID of the newly discovered physical resource object and the FDN identifier of the newly discovered physical resource object to the resource object identifier mapping relationship table.

With reference to the third aspect, in a third possible implementation, when the newly discovered resource object is a newly discovered physical resource object,
the receiving unit is configured to obtain a UUID of the newly discovered physical resource object from the control system; and
the processing unit is configured to: generate a corresponding FDN identifier for the newly discovered physical resource object, and add a mapping relationship between the UUID of the newly discovered physical resource object and the FDN identifier of the newly discovered physical resource object to the resource object identifier mapping relationship table.

With reference to any one of the third aspect, or the first to the third possible implementations, in a fourth possible implementation, when the newly discovered resource object is a service resource object, the processing unit is configured to: obtain a UUID of the service resource object from the control system, query the control system for a corresponding service according to the UUID of the service resource object, generate an FDN identifier for the service resource object according to a query result, and add a mapping relationship between the UUID of the service resource object and the FDN identifier of the service resource object to the resource object identifier mapping relationship table.

With reference to any one of the first to the fourth possible implementations, in a fifth possible implementation, the processing unit is further configured to: obtain a UUID of the to-be-managed resource object according to the FDN identifier of the to-be-managed resource object and the resource object identifier mapping relationship table, where the resource object identifier mapping relationship table includes a mapping relationship between the UUID of the to-be-managed resource object and the FDN identifier of the to-be-managed resource object; and the sending unit is configured to return the UUID of the to-be-managed resource object to the application system, where
the UUID of the to-be-managed resource object is used by the application system to manage detailed information of the to-be-managed resource object, which may specifically include: querying the detailed information of the to-be-managed resource object, modifying the detailed information of the to-be-managed resource object, or deleting the detailed information of the to-be-managed resource object.

By means of this implementation, the user may further manage, for example, query, modify, or delete, detailed information of the resource object in the SDN system by using the application system and by using the FDN identifier, so as to strengthen management on a resource in the SDN system.

With reference to any one of the first to the fifth possible implementations, in a sixth possible implementation, the receiving unit is further configured to receive a second query request sent by the application system, where the second query request is used to obtain the UUID of the to-be-managed resource object, and the second query request carries the FDN identifier of the to-be-managed resource object; and
the processing unit further obtains the UUID of the to-be-managed resource object according to the FDN identifier of the to-be-managed resource object that is carried in the second query request.

With reference to the fifth or the sixth possible implementation, in a seventh possible implementation, when the detailed information of the to-be-managed resource object that needs to be queried is detailed information of a to-be-managed service resource object, and the detailed information of the to-be-managed service resource object includes a physical resource object using a UUID and associated with the to-be-managed service resource object,
the receiving unit is further configured to receive a third query request sent by the application system, where the third query request carries the UUID of the physical resource object associated with the to-be-managed service resource object, and is used to obtain an FDN identifier of the physical resource object associated with the to-be-managed service resource object;
the processing unit is further configured to query the resource object identifier mapping relationship table according to the UUID of the physical resource object associated with the to-be-managed service resource object, to obtain the FDN identifier of the physical resource object associated with the to-be-managed service resource object, where the resource object identifier mapping relationship table includes a mapping relationship between the UUID of the physical resource object associated with the to-be-managed service resource object and the FDN identifier of the physical resource object associated with the to-be-managed service resource object; and
the sending unit is further configured to return, to the application system, the FDN identifier of the physical resource object associated with the to-be-managed service resource object.

With reference to any one of the third aspect, or the first to the seventh possible implementations, in an eighth possible implementation, when the to-be-managed resource object is a to-be-managed physical resource object,
the processing unit is configured to obtain an FDN identifier of the to-be-managed physical resource object; and
the sending unit is configured to return the FDN identifier of the to-be-managed physical resource object to the application system.

With reference to any one of the first to the eighth possible implementations, in a ninth possible implementation, the receiving unit is further configured to receive a fourth query request sent by the application system, where the fourth query request carries the FDN identifier of the to-be-managed physical resource object, and is used to query detailed information of the to-be-managed physical resource object;
the processing unit is further configured to query the detailed information of the to-be-managed physical resource object by using the FDN identifier of the to-be-managed physical resource object; and
the sending unit is further configured to return the detailed information of the to-be-managed physical resource object to the application system.

With reference to any one of the first to the ninth possible implementations, in a tenth possible implementation,
the processing unit is further configured to obtain a UUID of the to-be-managed physical resource object according to the FDN identifier of the to-be-managed physical resource object and the resource object identifier mapping relationship table, where the resource object identifier mapping relationship table includes a mapping relationship between the UUID of the to-be-managed physical resource object and the FDN identifier of the to-be-managed physical resource object, and the UUID of the to-be-managed physical resource object is used by the application system to manage the detailed information of the to-be-managed physical resource object.

With reference to any one of the fifth to the tenth possible implementations, in an eleventh possible implementation, the receiving unit is further configured to receive a fifth query request sent by the application system, where the fifth query request carries the UUID of the to-be-managed physical resource object, and is used to query the detailed information of the to-be-managed physical resource object;
the processing unit is further configured to obtain the detailed information of the to-be-managed physical resource object by using the UUID of the to-be-managed physical resource object; and
the sending unit is further configured to return the detailed information of the to-be-managed physical resource object to the application system.

With reference to any one of the first to the eleventh possible implementations, in a twelfth possible implementation, the receiving unit is further configured to receive a physical resource object information modification request sent by the application system, where the physical resource object information modification request carries the FDN identifier of the to-be-managed physical resource object and/or the UUID of the to-be-managed physical resource object, and is used to modify the detailed information of the to-be-managed physical resource object; and
the processing unit is further configured to modify the detailed information of the to-be-managed physical resource object by using the FDN identifier of the to-be-managed physical resource object and/or the UUID of the to-be-managed physical resource object.

With reference to any one of the first to the twelfth possible implementations, in a thirteenth possible implementation, the receiving unit is configured to receive a physical resource object information deletion request sent by the application system, where the physical resource object information deletion request carries the FDN identifier of the to-be-managed physical resource object and/or the UUID of the to-be-managed physical resource object, and is used to delete the detailed information of the to-be-managed physical resource object; and
the processing unit is further configured to delete the detailed information of the to-be-managed physical resource object by using the FDN identifier of the to-be-managed physical resource object and/or the UUID of the to-be-managed physical resource object.

According to a fourth aspect, an application system for managing a resource object in a software-defined networking SDN system is provided according to claim 13.

By means of this implementation, the user may further manage, for example, query, modify, or delete (refer to the following implementations), detailed information of the resource object in the SDN system by using the application system and by using the FDN identifier of the to-be-managed resource object, so as to strengthen management on a resource in the SDN system.

With reference to the first possible implementation, in a second possible implementation,
the sending unit is further configured to send a second query request to the management system, where the second query request carries the FDN identifier of the to-be-managed resource object, and is used to obtain the UUID of the to-be-managed resource object.

With reference to the fourth aspect, or the first or the second possible implementation, in a third possible implementation, when the to-be-managed resource object is a to-be-managed service resource object,
the first query request is used to obtain an FDN identifier of the to-be-managed service resource object; and
the FDN identifier of the to-be-managed resource object is the FDN identifier of the to-be-managed service resource object.

With reference to any one of the first to the third possible implementations, in a fourth possible implementation, when the to-be-managed resource object is a to-be-managed service resource object,
the sending unit is further configured to send a second query request to the management system, where the second query request is used to obtain a UUID of the to-be-managed service resource object, and the second query request carries an FDN identifier of the to-be-managed service resource object; and
the receiving unit is further configured to receive the UUID of the to-be-managed service resource object that is found according to the resource object identifier mapping relationship table and that is returned by the management system, where the UUID of the to-be-managed service resource object is used by the application system to manage detailed information of the to-be-managed service resource object, which may specifically include: querying the detailed information of the to-be-managed service resource object, modifying the detailed information of the to-be-managed service resource object, or deleting the detailed information of the to-be-managed resource object.

With reference to any one of the first to the fourth possible implementations, in a fifth possible implementation, the sending unit is further configured to send a sixth query request to the control system, where the sixth query request carries a UUID of the to-be-managed service resource object, to query the detailed information of the to-be-managed service resource object; and
the receiving unit is further configured to receive the detailed information of the to-be-managed service resource object that is returned by the control system.

With reference to any one of the first to the fifth possible implementations, in a sixth possible implementation, when the detailed information of the to-be-managed service resource object includes a physical resource object using a UUID and associated with the to-be-managed service resource object,
the processing unit is further configured to generate a third query request, where the third query request carries the UUID of the physical resource object associated with the to-be-managed service resource object, and is used to obtain an FDN identifier of the physical resource object associated with the to-be-managed service resource object;
the sending unit is further configured to send the third query request to the management system; and
the receiving unit is further configured to receive the FDN identifier of the physical resource object associated with the to-be-managed service resource object that is returned by the management system, where
the FDN identifier of the physical resource object associated with the to-be-managed service resource object and the UUID of the physical resource object associated with the to-be-managed service resource object are stored in the resource object identifier mapping relationship table of the management system.

With reference to any one of the fourth to the sixth possible implementations, in a seventh possible implementation,
the sending unit is further configured to send a service resource object information modification request to the control system, where the service resource object information modification request carries the UUID of the to-be-managed service resource object, to modify detailed information of the to-be-managed service resource object.

With reference to any one of the fourth to the seventh possible implementations, in an eighth possible implementation, the sending unit is further configured to send a service resource object information deletion request to the control system, where the service resource object information deletion request carries the UUID of the to-be-managed service resource object, to delete the detailed information of the to-be-managed service resource object.

With reference to any one of the fourth aspect, or the first to the eighth possible implementations, in a ninth possible implementation, when the to-be-managed resource object is a physical resource object,
the first query request is used to obtain an FDN identifier of the to-be-managed physical resource object; and
the FDN identifier of the to-be-managed resource object is the FDN identifier of the to-be-managed physical resource object.

With reference to the ninth possible implementation, in a tenth possible implementation, the sending unit is further configured to send a fourth query request to the management system, where the fourth query request carries the FDN identifier of the to-be-managed physical resource object, and is used to query detailed information of the to-be-managed physical resource object; and
the receiving unit is further configured to receive the detailed information of the to-be-managed physical resource object that is returned by the management system.

With reference to the ninth or the tenth possible implementation, in an eleventh possible implementation, the sending unit is further configured to send a physical resource object information modification request to the management system, where the physical resource object information modification request carries the FDN identifier of the to-be-managed physical resource object, and is used to modify the detailed information of the to-be-managed physical resource object.

With reference to any one of the ninth to the eleventh possible implementations, in a twelfth possible implementation, the sending unit is configured to send a physical resource object information deletion request to the management system, where the physical resource object information deletion request carries the FDN identifier of the to-be-managed physical resource object, and is used to delete the detailed information of the to-be-managed physical resource object.

With reference to any one of the ninth to the twelfth possible implementations, in a thirteenth possible implementation, the sending unit is configured to send a second query request to the management system, where the second query request is used to obtain a UUID of the to-be-managed physical resource object, and the second query request carries the FDN identifier of the to-be-managed physical resource object; and
the receiving unit is configured to receive the UUID of the to-be-managed physical resource object that is found according to the resource object identifier mapping relationship table and that is returned by the management system, where
With reference to any one of the ninth to the thirteenth possible implementations, in a fourteenth possible implementation,
the sending unit is further configured to send a fifth query request to the management system, where the fifth query request carries the UUID of the to-be-managed physical resource object, and is used to query the detailed information of the to-be-managed physical resource object; and
the receiving unit receives the detailed information of the to-be-managed physical resource object that is obtained by using the UUID of the to-be-managed physical resource object and that is returned by the management system.

With reference to any one of the ninth to the fourteenth possible implementations, in a fifteenth possible implementation,
the sending unit is further configured to send a physical resource object information modification request to the management system, where the physical resource object information modification request carries the UUID of the to-be-managed physical resource object, and is used to modify the detailed information of the to-be-managed physical resource object.

With reference to any one of the ninth to the fifteenth possible implementations, in a sixteenth possible implementation,
the sending unit is further configured to send a physical resource object information deletion request to the management system, where the physical resource object information deletion request carries the UUID of the to-be-managed physical resource object, and is used to delete the detailed information of the to-be-managed physical resource object.

According to a fifth aspect, an SDN communications system is provided, including the management system according to the third aspect, and including the application system according to the fourth aspect, according to claim 17.

### BRIEF DESCRIPTION OF DRAWINGS

FIG. 1 is a schematic structural diagram of an SDN system according to an embodiment of this application;
FIG. 2 is a flowchart of a method for managing a resource object according to an embodiment of this application;
FIG. 3 is a flowchart of creating a resource object identifier mapping relationship table according to an embodiment of this application;
FIG. 4 is a flowchart of a method for managing a service resource object according to an embodiment of this application;
FIG. 5 is a schematic diagram of a method for querying detailed information of a service resource object according to an embodiment of this application;
FIG. 6 is a schematic diagram of a method for modifying detailed information of a service resource object according to an embodiment of this application;
FIG. 7 is a schematic diagram of a method for deleting detailed information of a service resource object according to an embodiment of this application;
FIG. 8 is a flowchart of a method for managing a physical resource object according to an embodiment of this application;
FIG. 9A is a schematic diagram of a hardware structure of a management system according to an embodiment of this application;
FIG. 9B is a schematic diagram of a hardware structure of an application system according to an embodiment of this application;
FIG. 10A is a schematic diagram of a management system according to an embodiment of this application; and
FIG. 10B is a schematic structural diagram of an application system according to an embodiment of this application.

### DESCRIPTION OF EMBODIMENTS

An application scenario described in the embodiments of this application is used to more clearly describe the technical solutions in the embodiments of this application, and is not intended to limit the technical solutions provided in the embodiments of this application. A person of ordinary skill in the art may know that with the evolution of a network architecture and appearance of new service scenarios, the technical solutions provided in the embodiments of this application are also applicable to similar technical problems. It should be noted that, in this application, an "SDN network management system", an "SDN management system", a "network management system", a "management system", a "management plane", and an "SDN management plane" are used alternately; an "application system", an "SDN application system", an "application plane", and an "SDN application plane" are used alternately; an "SDN control system", a "control system", a "control plane", and an "SDN control plane" are used alternately; an "SDN data forwarding system", an "SDN forwarding system", a "data forwarding system", a "forwarding system", a "data plane", an "SDN data plane", a "forwarding plane", and an "SDN forwarding plane" are used alternately.

"First" in a first query request mentioned in the embodiments of this application is merely used to identify a name, and does not represent the first place in order. The rule is also applicable to "second", "third", "fourth", "fifth", and "sixth".

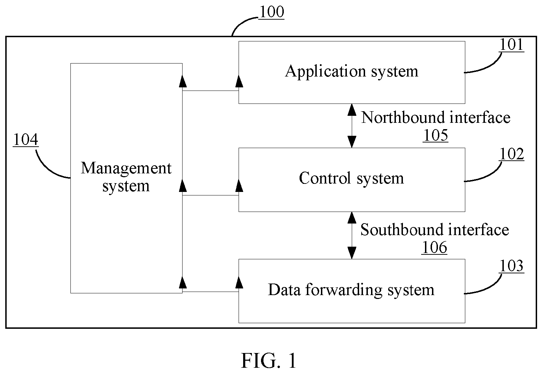

FIG. 1 shows an SDN system 100 according to an embodiment of this application. The SDN system 100 mainly includes an application system 101, a control system 102, a data forwarding system 103, and a management system 104. The application system, the control system, the data forwarding system, and the management system are also referred to as an application plane, a control plane, a data plane, and a management plane in the art.

The application system 101 is connected to the control system 102 by using an SDN northbound interface (NBI) 105. The SDN northbound interface is also referred to as an application-control plane interface (A-CPI), and the application system 101 includes multiple applications, and sends a network requirement to the control system 102 by using the A-CPI.

The control system 102 includes multiple controllers. Each controller is responsible for controlling resource information of one or more network elements in the data forwarding system 103, delivering, to the data forwarding system 103, the received network requirement sent by the application system 101, controlling a network element device, for example, a device such as a switch or a router, in the data forwarding system 103, and sending related resource information to the application system 101, to provide a network service to the application system 101. The control system 102 may optimize a configuration of a limited network resource by using a control policy, to meet an application requirement.

The data forwarding system 103 is connected to the control system 102 by using an SDN southbound interface (SBI) 106. The SDN southbound interface 106 is also referred to as a data-control plane interface (D-CPI). The data forwarding system 103 includes multiple network elements (English full name: Network Element, NE), and the multiple network elements include a switch, a router, a firewall, a packet transport network device, and the like. Each network element includes multiple physical resource objects, including a subrack, a slot, a card, a sub-slot, a port, and the like.

The management system 104 is separately connected to the application system 101, the control system 102, and the data forwarding system 103 by using a logical management function interface. In this embodiment of this application, a management function of the management system 104 may be implemented by using a business support system or an operation support system (BSS/OSS), a network management system (NMS), or an element management system (EMS) in an existing network. Specific structures and function modules of existing BSSs/OSSs, NMSs, or EMSs run by different operators may vary with an operation requirement. In addition to performing a conventional management function, the management system 104 further performs some particular management functions for the SDN system. For example, for the application system 101, the management system 104 is responsible for configuring service level agreements (SLAs) reached by a network service provider and a customer. Typical SLAs include the following items: a minimum bandwidth allocated to the customer, a bandwidth limit of the customer, a quantity of customers that can be served at the same time, notification and arrangement before a network change that may affect a user behavior, dial-in access availability, poorest network utilization performance supported by the service provider, traffic control permission of various types of customers, and the like. For the control system 102, the management system 104 needs to configure a specified related policy within a control scope of the application system 101. For the data forwarding system 103, the management system 104 is responsible for initializing a network element.

When a user manages, by using some applications in the application system 101, a resource object used by a related service in the SDN system (for example, queries, modifies, deletes, or perform another management operation on a resource object in some services in the SDN system), a visual resource information management interface needs to be presented to the user. The resource object used by the related service includes a physical resource object and a service resource object. Because the control plane of the SDN system uses a UUID to identify a resource object, and in the UUID, a string of numeral identifiers is used to identify information about the resource object, an application in the application system 101 cannot directly present visual detailed information of a resource object to the user based on the UUID.

In view of the foregoing case, an embodiment of this application provides a method for managing a resource object in an SDN system. By means of the method, an existing network management system and an application in the network management system (for example, a network management system managing non-SDN) can be reused to manage SDN, so that smooth evolution of an existing network system to a future-oriented SDN system can be implemented, and the existing network management system and a large quantity of applications in the network management system can be used to manage a resource object in the SDN system. In addition, the user can use some applications in the existing network that can identify only an FDN identifier to manage a resource object in the SDN system, and detailed resource information that can be understood by the user is presented to the user, to further manage the resource object. It should be noted that, the management system in the existing network used herein is not limited to an existing management system, and may be a management system that is subsequently improved and developed from the existing management system.

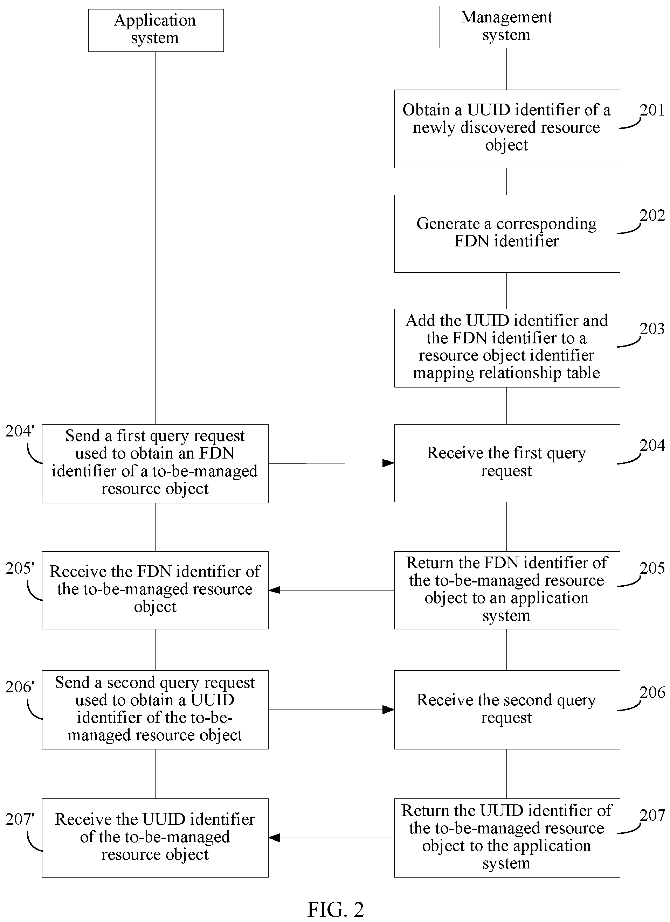

A method for managing a resource object in an SDN system provided in an embodiment of this application is described in detail below with reference to FIG. 2 to FIG. 4. The method is applied to the SDN system 100 shown in FIG. 1. The SDN system 100 includes the application system 101, the control system 102, and the management system 104; and the control system 102 uses a UUID to identify a resource object. As shown in FIG. 2, the method includes the following steps.

201: The management system obtains a UUID of a newly discovered resource object.

In a specific implementation, the UUID is a universally unique identifier, is a standard established by software, and is a unique identifier used by the Open Networking Foundation (ONF) organization to identify a resource object during design of the SDN system. UUIDs can uniquely identify all resource objects in the SDN system, and are distinct. A UUID is a string of digits generated by a server, and is similar to a label. The UUID can ensure that a network resource is uniquely identified in a same space-time. The UUID can ensure that all elements in an SDN distributed scenario have unique identifier information. It should be noted that, herein, a UUID, that is, a universally unique identifier is not merely limited to a UUID specified in the ONF, and may use another identifier form. For example, an identifier using an element without content that can be directly identified to uniquely identify a resource object may also be referred to as a UUID. In addition, it should be noted that, the expression "newly" in the term "newly discovered resource object" is mainly used for a language expression habit and used for convenience of describing a specific process, and may refer to a "discovered resource object" at any time; and the action "discover" is not limited in terms of time or other aspects.

202: The management system generates a corresponding full distinguished name FDN identifier for the newly discovered resource object.

The management system uses a full distinguished name (FDN) identifier to identify a resource object. The FDN identifier includes index information used to index detailed information of the resource object. A user can directly view, by using an application in the application system 101, the index information of the resource object that is carried in the FDN identifier. If the user wants to view the detailed information of the resource object, the corresponding detailed information of the resource object can be indexed by using the FDN identifier. Therefore, when the user manages the resource object, it is ensured that information about the resource object that can be understood can be presented to the user in an application interface of the application system 101.

In a specific implementation, an FDN identifier is an ASCII character string whose length is less than or equal to 255, and a format of the FDN identifier is: "TYPE=VALUE,TYPE=VALUE,...". A resource object identifier is allowed to use only a single-byte character, and is case sensitive. A character set that can be used by TYPE and VALUE includes: all visible ASCII characters and spaces. TYPE is represented by using a character string abbreviation, and use of digits only is not allowed. An inter-level delimiter uses a single-byte comma (,), and a delimiter between multiple pieces of information in VALUE uses a single-byte bar (|). A resource object at a current level is uniquely determined below a resource object at an upper level by using a combination of TYPE and VALUE.

For a physical resource object, an FDN identifier of a subboard is used as an example: "NE=3145951,FR=1,S=3,CP=2,SS=4,SC=2".

The NE indicates a network element ID, and NE=network element ID; FR indicates a rack of the network element, and FR=rack number; S indicates a slot number of the rack, and S=sub-slot number; CP indicates a board in the sub-slot, and CP=board ID; SS indicates a sub-slot, and SS=sub-slot number; SC indicates a subboard, and SC=subboard ID. It may be learned by using the FDN identifier that, the subboard 2 belongs to a sub-slot 4 of a board 2 of a slot 3 of the rack 1 of a network element 3145951. It may be learned from the foregoing example that, visual resource information can be reflected in a user interface by using the FDN identifier.

For a service resource object, an FDN identifier of a security VPN service tunnel is used as an example:
"SECS=5|100,SECSTLTNNEL=3145768|Ethernet1/0/1|1|3145859|Ethernet1/0/2/0/1|1".

SECS indicates a security VPN service, and SECS=service type|service ID, where 5 indicates a virtual private network over Secure Sockets Layer SSL VPN service; SECSTUNNEL indicates a security VPN service tunnel, and SECSTUNNEL=local device ID|local interface name|local tunnel ID|remote device ID|remote interface name|remote tunnel ID.

203: The management system adds a mapping relationship between the UUID of the newly discovered resource object and the FDN identifier of the newly discovered resource object to a resource object identifier mapping relationship table, where a mapping relationship between a UUID of a resource object and an FDN identifier of the resource object is stored in the resource object identifier mapping relationship table.

In a specific implementation, the resource object identifier mapping relationship table is created in the following manner: The management system obtains a UUID of a resource object; the management system generates a corresponding FDN identifier for the resource object; and the management system adds a mapping relationship between the UUID of the resource object and the FDN identifier of the resource object to the resource object identifier mapping relationship table. It should be noted that, a specific form of the resource object mapping relationship table may be implemented in multiple different manners, and the correspondence may be expressed in a form of a table or in another manner. This is not limited in this application, and any means to establish the correspondence that can be easily figured out by a person skilled in the art shall fall within the resource object identifier mapping relationship table in this embodiment of this application. In addition, the resource object identifier mapping relationship table may have a mapping relationship structure in which no specific content is filled, or may be a mapping relationship table including specific content. Specific content of the resource object identifier mapping relationship table may include only the mapping relationship between the UUID of the resource object and the FDN identifier of the resource object; or on this basis, the specific content further includes basic information of the resource object; or on this basis, the specific content further includes a mapping relationship between basic information of the resource object and the FDN identifier of the resource object. This is not limited in this application. Any table including the mapping relationship between the UUID of the resource object and the FDN identifier of the resource object may be referred to as the resource object identifier mapping relationship table in this application. The basic information of the resource object may be, for example, a number, a name, or another identifier of the resource object.

Ina specific implementation, the resource object includes a physical resource object or a service resource object, and a manner in which the management system obtains a UUID of a physical resource object is different from a manner in which the management system obtains a UUID of a service resource object.

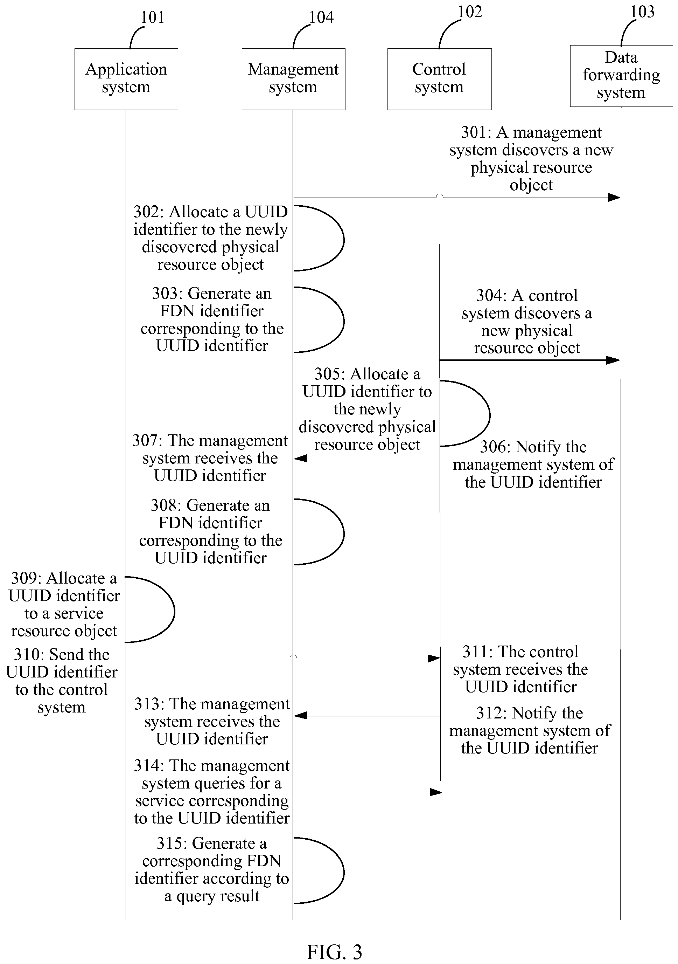

Processes in which the management system obtains a UUID of a resource object, generates an FDN identifier of the resource object, and establishes a mapping relationship between the identifiers of the resource object in this embodiment of this application are separately described below with reference to FIG. 3.

The following step 301 to step 308 are a method, provided in an embodiment of this application, for obtaining a UUID of a physical resource object, generating an FDN identifier of the physical resource object, and establishing a physical resource object identifier mapping relationship table including a mapping relationship between the UUID of the physical resource object and the FDN identifier of the physical resource object.

301: The management system 104 discovers a new physical resource object.

In a specific implementation, the management system discovers the new physical resource object by means of automatic discovery or a user configuration.

302: The management system 104 allocates a UUID to the newly discovered physical resource object.

In a specific implementation, the management system 104 may generate the UUID for the newly discovered physical resource object, where a specific generation process may be automatic and random generation and another existing manner, and associate the UUID with the physical resource object.

303: The management system 104 generates an FDN identifier corresponding to the UUID.

In a specific implementation, the management system 104 may generate the FDN identifier for the newly discovered physical resource object, where a specific generation process may be automatic and random generation and another existing manner, and associate the FDN identifier with the physical resource object.

An objective of the management system 104 is to provide an abstract and unified physical resource object identifier to the SDN control system. Therefore, usually, the management system 104 may be used as an execution body for searching for a physical resource object, to ensure functional cohesion in the SDN control system.

In a specific implementation, the control system 102 may be used to implement the function of searching for a physical resource object. The following step 304 and step 305 describe that the control system 102 implements a function of discovering and searching for a physical resource object provided in this application, and details are as follows:
304: The control system 102 discovers a new physical resource object.
305: The control system 102 allocates a UUID to the newly discovered physical resource object.

In a specific implementation, the control system 102 may generate the UUID for the newly discovered physical resource object, where a specific generation process may be automatic and random generation and another existing manner, and associate the UUID with the physical resource object.

306: The control system 102 sends the UUID of the newly discovered physical resource object to the management system 104.

307: The management system 104 obtains the UUID of the newly discovered physical resource object.

308: The management system generates an FDN identifier corresponding to the UUID of the newly discovered physical resource object.

A specific manner is the same as that of step 303, and details are not described herein again.

The management system 104 creates a resource object identifier mapping relationship table, where a mapping relationship between the UUID of the physical resource object and the FDN identifier of the physical resource object is stored in the resource object mapping relationship table. The resource object identifier mapping relationship table includes a mapping relationship between a UUID and an FDN identifier that correspond to each newly discovered physical resource object. The following step 309 to step 315 are a method, provided in an embodiment of this application, for generating a UUID of a service resource object and an FDN identifier of a service resource object, and creating a service resource object identifier mapping relationship table including a mapping relationship between the UUID of the service resource object and the FDN identifier of the service resource object.

309: The application system 101 allocates a UUID to a service resource object.

In a specific implementation, when delivering a new service request to the control system 102, the application system 101 configures a corresponding service resource object. When configuring the service resource object, the application system 101 allocates a corresponding UUID to the service resource object.

310: The application system 101 delivers a service request and the corresponding UUID of the service resource object to the control system 102 by using a northbound interface.

311: The control system 102 receives the UUID of the service resource object and the service request.

312: The control system 102 notifies the management system 104 of the UUID of the service resource object.

313: The management system 104 obtains the UUID of the service resource object.

314: The management system 104 queries, by using the UUID of the service resource object, the control system 102 for a service corresponding to the UUID of the service resource object.

In a specific implementation, because the control system 102 stores detailed information of the service resource object, the management system may query, by using the UUID of the service resource object, the control system 102 for the service corresponding to the UUID of the service resource object, to obtain detailed information of the service, for example, a service category, service content, a service attribute, or a service name.

315: The management system 104 generates a corresponding FDN identifier for the service resource object according to a query result.

In a specific implementation, the management system 104 generates the corresponding FDN identifier for the service resource object according to the query result, for example, according to the obtained information of the service resource, for example, information such as the service category, the name, and/or the service attribute.

The management system 104 adds a mapping relationship between the UUID of the service resource object and the FDN identifier of the service resource object to the resource object identifier mapping relationship table. It should be noted that, for the generated resource object identifier mapping relationship table described after step 303 or step 315, only an example in which the resource object identifier mapping relationship table includes a mapping relationship between a UUID of a resource object and an FDN identifier of the resource object is used for description. According to the descriptions of the resource object identifier mapping relationship table in step 203, a person skilled in the art may understand that, the management system may further add basic information of a resource object and/or detailed information of a resource object to a mapping relationship between a UUID of the resource object and an FDN identifier of the resource object, to generate mapping relationships between the basic information of the resource object and/or the detailed information of resource object, the UUID of the resource object, and the FDN identifier of the resource object.

204': The application system sends a first query request to the management system, where the first query request carries basic information of a to-be-managed resource object, and is used to obtain an FDN identifier of the to-be-managed resource object.

204: The management system receives the first query request sent by the application system, where the first query request is used to obtain the FDN identifier of the to-be-managed resource object.

In a specific implementation, for the first query request, a corresponding query request message may be generated according to an existing message protocol (for example, the RESTCONF protocol) exchanged between the application system and the management system, and the query request message carries basic information of the to-be-managed resource object, for example, information such as a number or a name of the to-be-managed resource object. For example, when an FDN identifier of a board is queried, the query request message carries a network element number, a slot number, and a board number.

205: The management system returns the FDN identifier of the to-be-managed resource object to the application system.

In a specific implementation, after receiving the first query request sent by the application system 101, the management system 104 finds, according to the basic information of the to-be-managed resource object that is carried in the first query request, for example, the number or the name of the to-be-managed resource object mentioned above, the FDN identifier corresponding to the to-be-managed resource object.

In another specific implementation, the resource object mapping relationship table includes a mapping relationship between the basic information of the to-be-managed resource object and the FDN identifier of the to-be-managed resource object. After receiving the first query request sent by the application system 101, the management system 104 finds, according to the basic information of the to-be-managed resource object that is carried in the first query request, for example, the number or the name of the to-be-managed resource object mentioned above, and the resource object identifier mapping relationship table, the FDN identifier corresponding to the to-be-managed resource object. In addition, when the FDN identifier of the resource object already includes the basic information of the resource object, the management system may directly query the FDN identifier of the resource object that is stored by the management system, and when determining that the FDN identifier of the resource object includes the basic information of the to-be-managed resource object, the management system can determine that the FDN identifier of the resource object is the FDN identifier of the to-be-managed resource object.

205': The application system receives the FDN identifier of the to-be-managed resource object that is returned by the management system.

In a specific implementation, if the application system receives the FDN identifier of the to-be-managed resource object that is returned by the management system 104, the user may view, by using the application interface of the application system 101, index information of the to-be-managed resource object that is carried in the FDN identifier. For example, when the to-be-managed resource object is a subboard, index information that corresponds to an FDN identifier of the subboard and that can be viewed by the user by using the application interface includes: a network element number, a rack number, a slot number, a board number, and a subboard number that correspond to the subboard. In another specific implementation, the management system 104 may first obtain a UUID of the to-be-managed resource object according to the basic information of the to-be-managed resource object in the first query request, and correspondingly obtain the FDN identifier of the to-be-managed resource object according to the resource object mapping relationship table.

In another specific implementation, the application system 101 may manage the to-be-managed resource object according to the UUID of the to-be-managed resource object, to further manage the resource object. The method specifically includes:
The management system 104 may find, in the resource object identifier mapping relationship table according to the FDN identifier of the to-be-managed resource object, the UUID corresponding to the FDN identifier of the to-be-managed resource object, and return the FDN identifier of the to-be-managed resource object and the UUID of the to-be-managed resource object to the application system 101. The application system 101 may manage the to-be-managed resource object according to the UUID of the to-be-managed resource object, to further manage the resource object.

In another specific implementation, the returning, by the management system 104, the FDN identifier of the to-be-managed resource object and the UUID of the to-be-managed resource object to the application system 101 may further include:
206': The application system sends a second query request to the management system according to the obtained FDN identifier of the to-be-managed resource object that is returned by the management system, where the second query request is used to obtain the UUID of the to-be-managed resource object, and the second query request carries the FDN identifier of the to-be-managed resource object.
206: The management system receives the second query request, and queries the resource object identifier mapping relationship table according to the FDN identifier of the to-be-managed resource object, to obtain the UUID of the to-be-managed resource object.
207: The management system returns the UUID of the to-be-managed resource object to the application system.

In a specific implementation, the management system 104 queries the resource object identifier mapping relationship table according to the FDN identifier of the to-be-managed service resource object, to obtain the UUID of the to-be-managed service resource object. The resource object identifier mapping relationship table includes a mapping relationship between the UUID of the to-be-managed service resource object and the FDN identifier of the to-be-managed service resource object.

207': The application system receives the UUID of the to-be-managed resource object that is returned by the management system.

It should be noted that, in another implementation, after receiving the first query request sent by the application system 101, the management system 104 may return both the FDN identifier of the to-be-managed resource object and the UUID of the to-be-managed resource object to the application system 101.

The UUID of the to-be-managed resource object is used by the application system to manage the to-be-managed resource object, which may specifically include: querying detailed information of the to-be-managed resource object, modifying detailed information of the to-be-managed resource object, or deleting detailed information of the to-be-managed resource object.

By means of the foregoing implementation, after the application system 101 obtains the FDN identifier of the to-be-managed resource object, the user can view, by using an application in the application system 101, the index information of the to-be-managed resource object that is identified by the FDN identifier. Further, the application system may manage, for example, query, modify, or delete, the detailed information of the to-be-managed resource object according to the FDN identifier and/or the UUID of to-be-managed resource object, so as to strengthen management on the resource object in the SDN system.

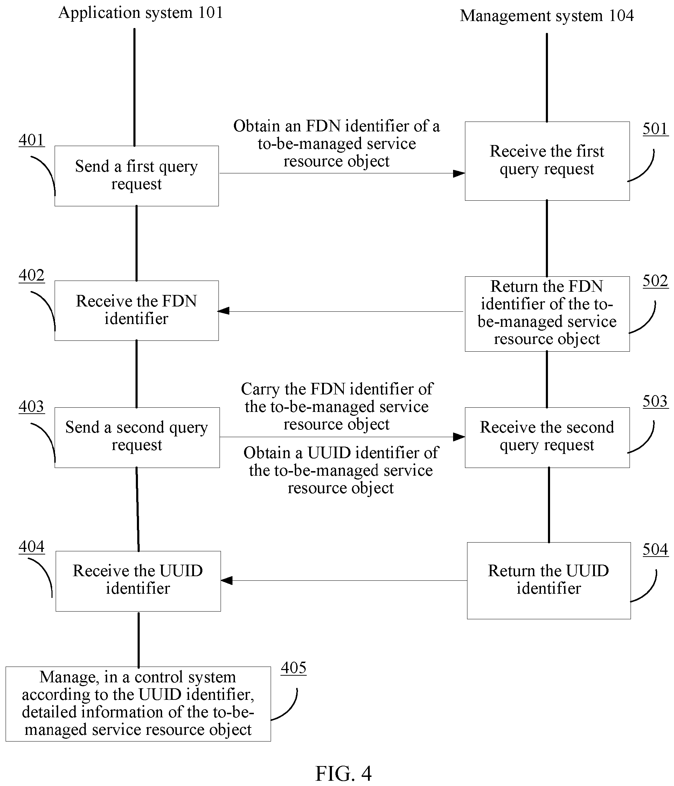

In this embodiment of this application, the to-be-managed resource object includes a to-be-managed physical resource object or a to-be-managed service resource object. A method for managing a service resource object in an SDN system provided in an embodiment of this application is described below with reference to FIG. 4. The method is applied to the SDN system 100 shown in FIG. 1.

401: The application system sends a first query request to the management system, where the first query request message carries basic information of a to-be-managed service resource object, and is used to obtain an FDN identifier of the to-be-managed service resource object.

In a specific implementation, the application system generates the first query request, where the first query request is used to obtain the full distinguished name FDN identifier of the to-be-managed service resource object. For the first query request, a corresponding query request message may be generated according to an existing message protocol (for example, the RESTCONF protocol) exchanged between the application system and the management system, and the first query request message carries the basic information of the to-be-managed service resource object, for example, a service type or source/sink node information of the to-be-managed service resource object.

In the SDN system 100, FDN identifiers of a physical resource object and a service resource object are both stored in the management system 104. Therefore, when managing a service resource object by using the application plane, a user first selects a corresponding to-be-managed service resource object on the application plane, the application system 101 generates a first query request for the to-be-managed service resource object according to the to-be-managed service resource object selected by the user, to obtain an FDN identifier of the to-be-managed service resource object. The application system 101 sends the first query request to the management system 104.

501: The management system receives the first query request sent by the application system.

502: The management system returns the FDN identifier of the to-be-managed service resource object to the application system.

In a specific implementation, after receiving the first query request sent by the application system 101, the management plane system 104 finds, according to the basic information of the to-be-managed resource object in the first query request, for example, the service type or the node information of the to-be-managed service resource object mentioned above, the FDN identifier corresponding to the to-be-managed service resource object, and returns the FDN identifier to the application system 101.

In another specific implementation, a mapping relationship between the basic information of the to-be-managed service resource object and the FDN identifier of the to-be-managed service resource object is stored in a resource object mapping relationship table. After receiving the first query request sent by the application system 101, the management system 104 finds, according to the basic information of the to-be-managed service resource object that is carried in the first query request, for example, the service type or the node information of the to-be-managed service resource object mentioned above, and the resource object identifier mapping relationship table, the FDN identifier corresponding to the to-be-managed service resource object.

402: The application system receives the FDN identifier of the to-be-managed service resource object that is returned by the management system.

In a specific implementation, if the application system 101 receives the FDN identifier corresponding to the to-be-managed service resource object and returned by the management system 104, the user can view, by using an application interface of the application system 101, index information of the to-be-managed service resource object corresponding to the FDN identifier. Using a security VNP service as an example, for example, index information that corresponds to an FDN identifier of the service and that can be viewed by the user by using the application interface includes: a service type or an interface name.

In another specific implementation, the management system 104 may first obtain a UUID of the to-be-managed service resource object according to the basic information of the to-be-managed service resource object in the first query request, and correspondingly obtain the FDN identifier of the to-be-managed service resource object according to the resource object mapping relationship table.

In another specific implementation, the application system 101 may manage detailed information of the to-be-managed service resource object according to the UUID of the to-be-managed service resource object, so as to strengthen management on the service resource object. The method specifically includes:
The management system 104 may find, in the resource object identifier mapping relationship table according to the FDN identifier of the to-be-managed service resource object, the UUID corresponding to the FDN identifier of the to-be-managed service resource object, and return the FDN identifier of the to-be-managed service resource object and the UUID of the to-be-managed service resource object to the application system 101. The resource object identifier mapping relationship table includes a mapping relationship between the UUID of the to-be-managed service resource object and the FDN identifier of the to-be-managed service resource object. The application system 101 may manage the detailed information of the to-be-managed resource object according to the UUID of the to-be-managed resource object, to further manage the resource object.

In another specific implementation, the returning, by the management system 104, the FDN identifier of the to-be-managed resource object and the UUID of the to-be-managed resource object to the application system 101 may further include step 403 to step 405, and step 503 to step 504.

403: The application system sends a second query request to the management system according to the obtained FDN identifier of the to-be-managed service resource object, where the second query request is used to obtain the UUID of the to-be-managed service resource object, and the second query request carries the FDN identifier of the to-be-managed service resource object.

In a specific implementation, in the SDN system 100, an FDN identifier of a service resource object is stored in the management system 104, but detailed information of the service resource object is stored in the control system 102. In this case, the control system 102 indexes the detailed information of the service resource object by using the UUID of the service resource object. When the user needs to manage the to-be-managed service resource object, the user may view, by using the FDN identifier of the to-be-managed service resource object, the index information corresponding to the to-be-managed service resource object. The user needs to further obtain the corresponding UUID by using the FDN identifier of the to-be-managed service resource object, so as to obtain the detailed information of the service resource object from the control system 102 according to the obtained UUID.

503: The management system receives the second query request sent by the application system.

504: The management system returns the UUID of the to-be-managed service resource object to the application system.

In a specific implementation, the management system 104 queries the resource object identifier mapping relationship table according to the FDN identifier of the to-be-managed service resource object, to obtain the UUID of the to-be-managed service resource object. The resource object identifier mapping relationship table includes the mapping relationship between the UUID of the to-be-managed service resource object and the FDN identifier of the to-be-managed service resource object.

404: The application system receives the UUID of the to-be-managed service resource object that is obtained according to the resource object identifier mapping relationship table and that is returned by the management system.

It should be noted that, in another implementation, after receiving the first query request sent by the application system 101, the management system 104 may return both the FDN identifier of the to-be-managed service resource object and the UUID of the to-be-managed service resource object to the application system 101.

405: The application system manages detailed information of the to-be-managed service resource object in the control system by using the UUID of the to-be-managed service resource object.

In a specific implementation, the detailed information of the to-be-managed service resource object is stored in the control system 102. The application system 101 can query, modify, or delete the detailed information of the to-be-managed service resource object in the control system 102 by using the UUID of the to-be-managed service resource object. The application system may obtain the detailed information of the to-be-managed service resource object, and the detailed information is visual information that can be understood by the user. The application plane presents the information to the user, so that when the user can view and manage the detailed information of the service resource object, visual information that can be understood by the user is presented in the management interface.

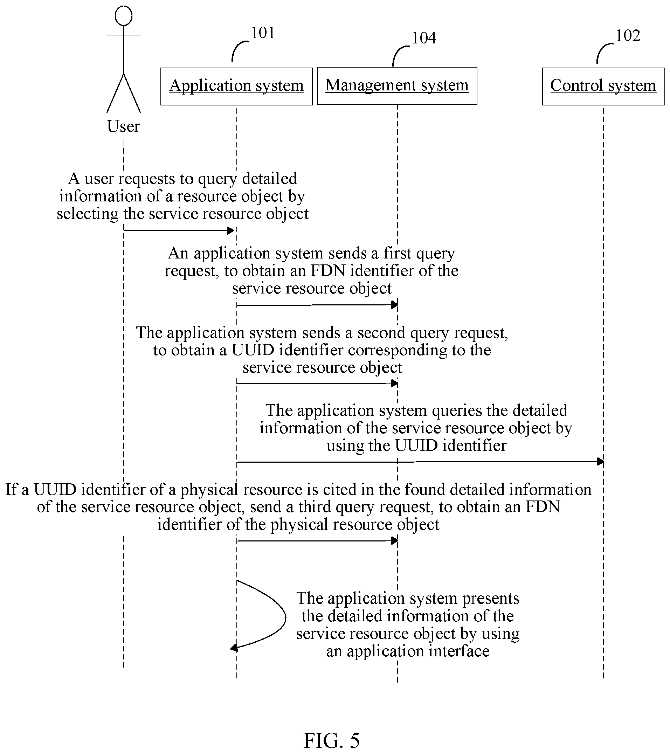

Management behaviors such as querying, modification, or deletion of the user on the detailed information of the service resource object in this embodiment of this application are separately described below with reference to FIG. 5 to FIG. 7.

As shown in FIG. 5, an example in which the user queries detailed information of a service resource object is used for description, and the service resource object is, for example, an Ethernet line service resource object. When the user queries the detailed information of the service resource object, the user selects the corresponding service resource object by using the application interface of the application system 101, and requests to query the detailed information of the service resource object, for example, a service category, service content, a service attribute, or a service name. The application system 101 sends the first query request to the management system 104, to obtain an FDN identifier of the service resource object. The application system 101 receives the FDN identifier of the to-be-managed service resource object that is returned by the management system. The application system 101 sends a second query request to the management system 104, where the second query request is used to obtain a UUID of the to-be-managed service resource object, and the second query request carries the FDN identifier of the to-be-managed service resource object. The application system 101 receives the UUID of the to-be-managed service resource object that is found according to the resource object identifier mapping relationship table and that is returned by the management system 104. The application system 101 sends a sixth query request to the control system 102, where the sixth query request carries the UUID of the to-be-managed service resource object, to query the detailed information of the to-be-managed service resource object. The application system 101 receives the detailed information of the to-be-managed service resource object that is returned by the control system 102.

In a specific implementation, after the application system 101 receives the detailed information of the to-be-managed resource object that is returned by the control system 102, the user may view, modify, delete, or perform related management on the detailed information of the to-be-managed resource object by using the application interface of the application system 101.

In another specific manner, if the found detailed information of the service resource object includes detailed information of a physical resource object using a UUID and associated with the to-be-managed Ethernet line service resource object, that is, the UUID of the physical resource is cited in the found detailed information of the service resource object, the application system 101 sends a third query request to the management system 104, where the third query request carries the UUID of the physical resource object associated with the to-be-managed Ethernet line service resource object, and is used to obtain an FDN identifier of the physical resource object associated with the to-be-managed service resource object. The application system 101 receives the FDN identifier of the physical resource object associated with the to-be-managed service resource object that is found according to the resource object identifier mapping relationship table and that is returned by the management system 104.

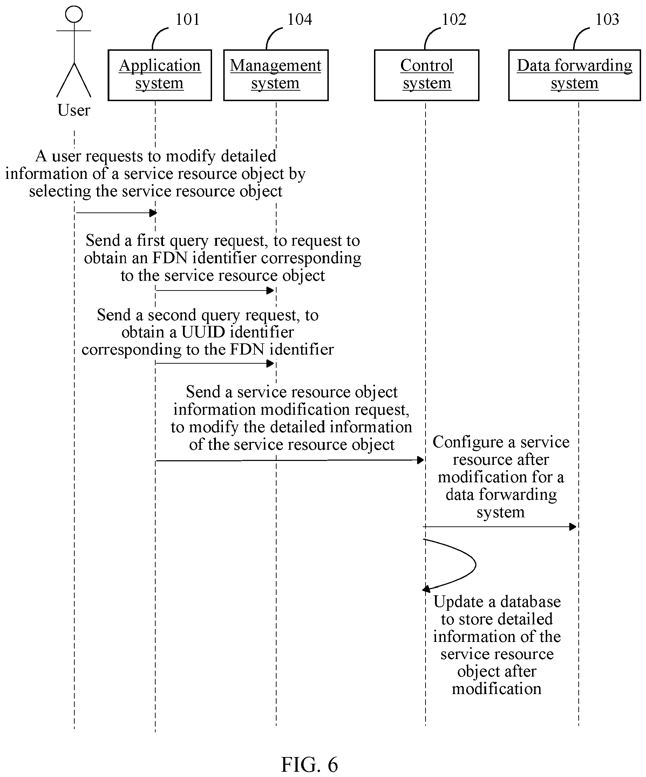

The application system 101 presents the detailed information of the service resource object to the user by using the application interface. As shown in FIG. 6, when the user requests to modify detailed information of a service resource object, the service resource object is, for example, an Ethernet line service resource object. The user selects the corresponding service resource object by using the application interface of the application system 101, requests to modify the detailed information of the service resource object, for example, a service category, service content, a service attribute, or a service name. The application system 101 sends a first query request to the management system 104, to obtain an FDN identifier of the service resource object. The application system 101 receives the FDN identifier of the to-be-managed service resource object that is returned by the management system. The application system 101 sends a second query request to the management 104, where the second query request is used to obtain a UUID of the to-be-managed service resource object, and the second query request carries the FDN identifier of the to-be-managed service resource object. The application system 101 receives the UUID of the to-be-managed service resource object that is found according to the resource object identifier mapping relationship table and that is returned by the management system 104. The application system 101 sends a service resource object information modification request to the control system 102, where the service resource object information modification request carries the UUID of the to-be-managed service resource object, to modify the detailed information of the to-be-managed service resource object. After modifying the detailed information of the service resource object, the control system 102 configures a service resource after modification for the data forwarding system, and updates a database to store detailed information of the service resource object after modification.

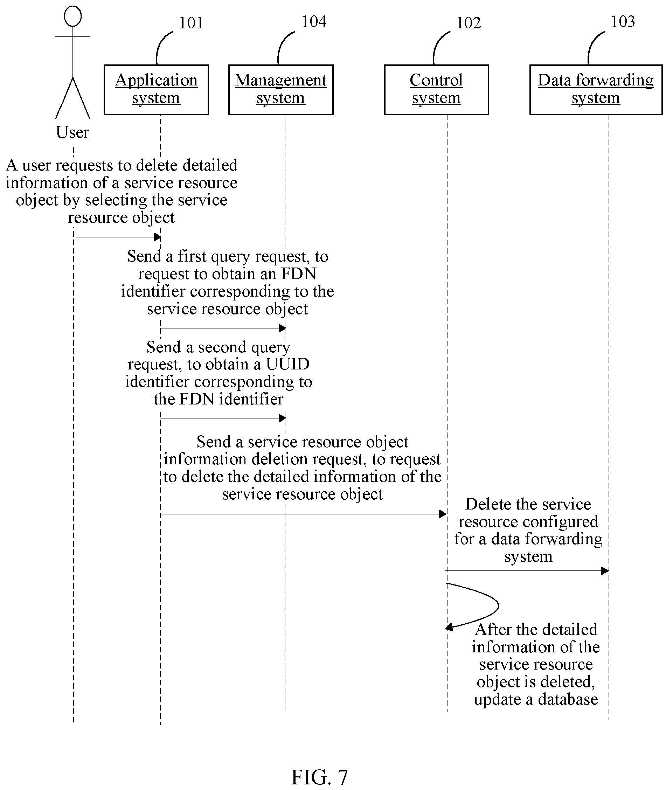

As shown in FIG. 7, when the user requests to delete detailed information of a service resource object, the service resource object may be, for example, an Ethernet line service resource object. The user selects the corresponding service resource object by using the application interface of the application system 101, requests to delete the detailed information of the service resource object, for example, a service category, service content, a service attribute, or a service name. The application system 101 sends the first query request to the management system 104, to obtain an FDN identifier of the service resource object. The application system 101 receives the FDN identifier of the to-be-managed service resource object that is returned by the management system. The application system 101 sends the second query request to the management 104, where the second query request is used to obtain a UUID of the to-be-managed service resource object, and the second query request carries the FDN identifier of the to-be-managed service resource object. The application system 101 receives the UUID of the to-be-managed service resource object that is found according to the resource object identifier mapping relationship table and that is returned by the management system 104. The application system 101 sends a service resource object information deletion request to the control system 102, where the service resource object information deletion request carries the UUID of the to-be-managed service resource object, to delete the detailed information of the to-be-managed service resource object. After deleting the detailed information of the service resource object, the control system 102 deletes the service resource configured for the data forwarding system and updates a database.

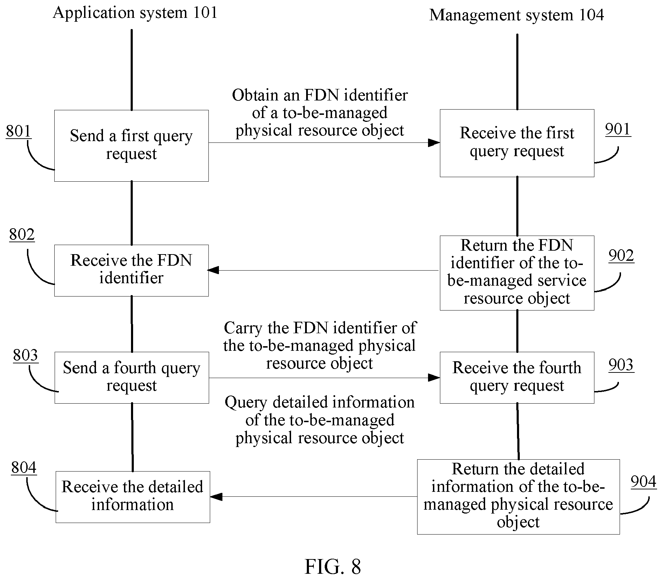

A method for managing a physical resource object in an SDN system provided in an embodiment of this application is described below with reference to FIG. 8. The method is applied to the SDN system 100 shown in FIG. 1.

801: The application system sends a first query request to the management system, where the first query request carries basic information of a to-be-managed physical resource object, and is used to obtain a full distinguished name FDN identifier of the to-be-managed physical resource object.

In a specific implementation, the application system 101 generates the first query request. For the first query request, a corresponding query request message may be generated according to an existing message protocol (for example, the RESTCONF protocol) exchanged between the application system and the management system, and the first query request message carries the basic information of the to-be-managed resource object, for example, information such as a number or a name of the to-be-managed physical resource object. For example, when an FDN identifier of a board is queried, the query request message carries basic information such as a number of a network element in which the board is located, a slot number, and a board number.

In the SDN system 100, FDN identifiers of a physical resource object and a service resource object are both stored in the management system 104. Therefore, when managing a physical resource object by using the application plane, a user first selects a corresponding to-be-managed physical resource object on the application plane, the application system 101 generates a first query request for the to-be-managed physical resource object according to the to-be-managed physical resource object selected by the user, to obtain an FDN identifier of the to-be-managed physical resource object. The application system 101 sends the first query request to the management system 104.

901: The management system receives the first query request sent by the application system.

902: The management system returns the FDN identifier of the to-be-managed physical resource object to the application system.

In a specific implementation, after receiving the first query request sent by the application system 101, the management plane system 104 finds, according to the basic information of the to-be-managed physical resource object in the first query request, the FDN identifier corresponding to the to-be-managed physical resource object, and returns the FDN identifier to the application system 101.

802: The application system receives the FDN identifier of the to-be-managed physical resource object that is returned by the management system.

In a specific implementation, if the application system 101 receives the FDN identifier corresponding to the to-be-managed physical resource object and returned by the management system 104, the user may view, by using an application interface of the application system 101, index information of the to-be-managed physical resource object corresponding to the FDN identifier. Using a subboard as an example, index information that corresponds to an FDN identifier of the subboard and that can be viewed by the user by using the application interface includes: a network element number, a rack number, a slot number, a board number, and a subboard number that correspond to the subboard.

In another specific implementation, the resource object mapping relationship table includes a mapping relationship between the basic information of the to-be-managed physical resource object and the FDN identifier of the to-be-managed physical resource object. After receiving the first query request sent by the application system 101, the management system 104 finds, according to the basic information of the to-be-managed physical resource object that is carried in the first query request, for example, the number or the name of the to-be-managed physical resource object mentioned above, and the resource object identifier mapping relationship table, the FDN identifier corresponding to the to-be-managed resource object.

Further, when the user wants to query detailed information of the to-be-managed physical resource object, the method further includes:
803: The application system generates a fourth query request to the management system, where the fourth query request carries the FDN identifier of the to-be-managed physical resource object, and is used to query detailed information of the to-be-managed physical resource object.
903: The management system receives the fourth query request, and queries the detailed information of the to-be-managed physical resource object by using the FDN identifier of the to-be-managed physical resource object.
904: The management system returns the detailed information of the to-be-managed physical resource object to the application system.
804: The application system receives the detailed information of the to-be-managed physical resource object.

In another specific implementation, the detailed information of the to-be-managed physical resource object may be queried by using a UUID of the to-be-managed physical resource object, and the method specifically includes:
The management system 104 may find, in the resource object identifier mapping relationship table according to the FDN identifier of the to-be-managed physical resource object, the UUID corresponding to the FDN identifier of the to-be-managed physical resource object, and return the FDN identifier of the to-be-managed physical resource object and the UUID of the to-be-managed physical resource object to the application system 101. The resource object identifier mapping relationship table includes a mapping relationship between the UUID of the to-be-managed physical resource object and the FDN identifier of the to-be-managed physical resource object. The application system 101 sends a fifth query request to the management system, where the fifth query request carries the UUID of the to-be-managed physical resource object, and is used to query the detailed information of the to-be-managed physical resource object. The management system receives the fifth query request, obtains the detailed information of the to-be-managed physical resource object according to the UUID of the to-be-managed physical resource object, and returns the detailed information of the to-be-managed physical resource object to the application system. Therefore, the application system can query the detailed information of the to-be-managed resource object, to further manage the resource object.

In another specific implementation, the returning, by the management system 104, the FDN identifier of the to-be-managed physical resource object and the UUID of the to-be-managed physical resource object to the application system 101 may further include:
in response to the received first query request, returning, by the management system 104, the FDN identifier of the to-be-managed physical resource object to the application system 101;
receiving, by the application system 101, the FDN identifier of the to-be-managed physical resource object that is returned by the management system 104, and generating a second query request, where the second query request is used to obtain the UUID of the to-be-managed physical resource object, and the second query request carries the FDN identifier of the to-be-managed physical resource object;
receiving, by the management system 104, the second query request, and querying the resource object identifier mapping relationship table according to the FDN identifier of the to-be-managed physical resource object, to obtain the UUID of the to-be-managed physical resource object; and
returning, by the management system 104, the UUID of the to-be-managed physical resource object to the application system 101.

After the application system 101 obtains the FDN identifier of the to-be-managed physical resource object, the user can view, by using an application in the application system 101, the index information of the to-be-managed physical resource object that is identified by the FDN identifier.

In a specific implementation, the application system 101 may modify or delete the detailed information of the to-be-managed physical resource object according to the FDN identifier and/or the UUID of the to-be-managed physical resource object, to further manage the to-be-managed physical resource object.

In a specific implementation, the modifying, by the application system 101, the detailed information of the to-be-managed physical resource object according to the FDN identifier and/or the UUID of the to-be-managed resource object, to further manage the to-be-managed physical resource object specifically includes:
sending, by the application system, a physical resource object information modification request to the management system, where the physical resource object information modification request carries the FDN identifier of the to-be-managed physical resource object and/or the UUID of the to-be-managed physical resource object, and is used to modify the detailed information of the to-be-managed physical resource object.

In another specific implementation, the deleting, by the application system 101, the detailed information of the to-be-managed physical resource object according to the FDN identifier and/or the UUID of the to-be-managed resource object, to further manage the to-be-managed physical resource object specifically includes:
sending, by the application system, a physical resource object information deletion request to the management system, where the physical resource object information deletion request carries the FDN identifier of the to-be-managed physical resource object and/or the UUID of the to-be-managed physical resource object, and is used to delete the detailed information of the to-be-managed physical resource object.

According to the method for managing a resource object in an SDN system provided in this embodiment of this application, a mapping relationship table including an FDN identifier and a UUID of a resource object is created in the management system, to store a mapping relationship between the UUID of the resource object and the FDN identifier of the resource object, so that the resource object in the SDN system can be managed by using the application system by slightly modifying an existing network management system and an application based on the network management system, thereby implementing smooth evolution of an existing network system to the future SDN system. Further, when a user manages a resource object by using a management interface of the application system, visual resource object information can be presented to the user by using the management interface by obtaining an FDN identifier of the resource object, for the user to query basic index information of the resource object. Further, the user can query, modify, or delete detailed information of the resource object by using the FDN identifier, to further manage the resource object.

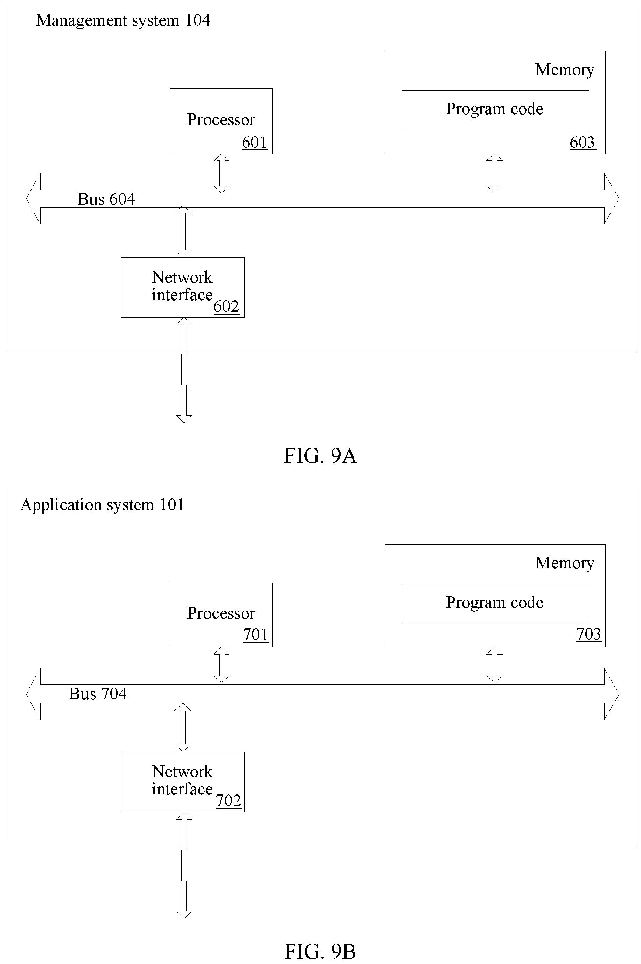

FIG. 9A is a schematic diagram of a hardware structure of a management system for managing a resource object in the SDN system shown in FIG. 1 according to an embodiment of this application. The management system is a management system 104 shown in FIG. 9A, and the management system 104 is configured to perform the methods in the embodiments in FIG. 2 to FIG. 8.

A management system for managing a resource object in a software-defined networking SDN system is provided. The SDN system 100 includes the management system 104, an application system 101, and a control system 102. The control system 102 uses a universally unique identifier UUID to identify a resource object. The management system 104 includes a processor 601, a network interface 602, and a memory 603. The processor 601 communicates with the application system 101 and the control system 102 by using the network interface 602. The processor 601, the memory 603, and the network interface 602 may communicate with each other by using a bus 604.

The processor 601 is configured to: obtain a UUID of a newly discovered resource object, generate a corresponding full distinguished name FDN identifier for the newly discovered resource object, and add a mapping relationship between the UUID of the newly discovered resource object and the FDN identifier of the newly discovered resource object to a resource object identifier mapping relationship table, where a mapping relationship between a UUID of a resource object and an FDN identifier of the resource object is stored in the resource object identifier mapping relationship table.

The memory 603 is configured to store the resource object identifier mapping relationship table.

The network interface 602 is configured to receive a first query request for a to-be-managed resource object that is sent by the application system, where the first query request includes basic information of the to-be-managed resource object, and the first query request is used to obtain an FDN identifier of the to-be-managed resource object.

The processor 601 is further configured to obtain the FDN identifier of the to-be-managed resource object according to the basic information of the to-be-managed resource object.

The network interface 602 is configured to return the FDN identifier of the to-be-managed resource object to the application system 101.

In the foregoing technical solution, the resource object identifier mapping relationship table is created in the management system, to store a mapping relationship between a UUID of a resource object and an FDN identifier of the resource object, so that the resource object in the SDN system can be managed by using the application system by slightly modifying a network management system in an existing network system and an application based on the network management system, thereby implementing smooth evolution of the existing network system to the SDN system. Further, when a user manages a resource object by using a management interface of the application system, visual resource object information can be presented to the user by using the management interface by obtaining an FDN identifier of the resource object, for the user to query basic index information of the resource object.

In a specific implementation, when the newly discovered resource object is a newly discovered physical resource object, the processor 601 is configured to: obtain a UUID of the newly discovered physical resource object from the control system 102, generate a corresponding FDN identifier for the newly discovered physical resource object, and add a mapping relationship between the UUID of the newly discovered physical resource object and the FDN identifier of the newly discovered physical resource object to the resource object identifier mapping relationship table.

In another specific implementation, when the newly discovered resource object is a newly discovered physical resource object, the processor 601 is configured to: allocate a UUID to the newly discovered physical resource object, generate a corresponding FDN identifier for the newly discovered physical resource object, and add a mapping relationship between the UUID of the newly discovered physical resource object and the FDN identifier of the newly discovered physical resource object to the resource object identifier mapping relationship table.

In a specific implementation, when the newly discovered resource object is a service resource object, the processor 601 is configured to: obtain a UUID of the service resource object from the control system 102, query the control system 102 for a corresponding service according to the UUID of the service resource object, and generate an FDN identifier for the service resource object according to a query result, and configured to add a mapping relationship between the UUID of the service resource object and the FDN identifier of the service resource object to the resource object identifier mapping relationship table. The UUID of the service resource object may be delivered by the application system 101 to the control system 102 by using a northbound interface.

In a specific implementation, the processor 601 is further configured to obtain a UUID of the to-be-managed resource object according to the FDN identifier of the to-be-managed resource object and the resource object identifier mapping relationship table, where the resource object identifier mapping relationship table includes a mapping relationship between the UUID of the to-be-managed resource object and the FDN identifier of the to-be-managed resource object, and the UUID of the to-be-managed resource object is used by the application system to manage detailed information of the to-be-managed resource object.

The network interface 602 is configured to return the UUID of the to-be-managed resource object to the application system.

The UUID of the to-be-managed resource object is used by the application system to manage detailed information of the to-be-managed resource object, which may specifically include: querying the detailed information of the to-be-managed resource object, modifying the detailed information of the to-be-managed resource object, or deleting the detailed information of the to-be-managed resource object.

By means of this implementation, the user may further manage, for example, query, modify, or delete, detailed information of the resource object in the SDN system by using the application system and by using the FDN identifier, so as to strengthen management on a resource in the SDN system.

In a specific implementation, the network interface 602 is further configured to receive a second query request sent by the application system, where the second query request is used to obtain the UUID of the to-be-managed resource object, and the second query request carries the FDN identifier of the to-be-managed resource object.

The processor 601 is further configured to obtain the UUID of the to-be-managed resource object according to the FDN identifier of the to-be-managed resource object that is carried in the second query request.

In a specific implementation, when the detailed information of the to-be-managed resource object that needs to be queried is detailed information of a to-be-managed service resource object, and the detailed information of the to-be-managed service resource object includes a physical resource object using a UUID and associated with the to-be-managed service resource object,
the network interface 602 is further configured to receive a third query request sent by the application system 101, where the third query request carries the UUID of the physical resource object associated with the to-be-managed service resource object, and is used to obtain an FDN identifier of the physical resource object associated with the to-be-managed service resource object;
the processor 601 is further configured to query the resource object identifier mapping relationship table according to the UUID of the physical resource object associated with the to-be-managed service resource object, to obtain the FDN identifier of the physical resource object associated with the to-be-managed service resource object, where the resource object identifier mapping relationship table includes a mapping relationship between the UUID of the physical resource object associated with the to-be-managed service resource object and the FDN identifier of the physical resource object associated with the to-be-managed service resource object; and
the network interface 602 is further configured to return, to the application system 101, the FDN identifier of the physical resource object associated with the to-be-managed service resource object.

In a specific implementation, when the to-be-managed resource object is a to-be-managed physical resource object,
the processor 601 is configured to obtain an FDN identifier of the to-be-managed physical resource object;
the network interface 602 is configured to: return the FDN identifier of the to-be-managed physical resource object to the application system 101; and receive a fourth query request sent by the application system, where the fourth query request carries the FDN identifier of the to-be-managed physical resource object, and is used to index detailed information of the to-be-managed physical resource object;
the processor 601 is further configured to index the detailed information of the to-be-managed physical resource object by using the FDN identifier of the to-be-managed physical resource object; and
the network interface 602 is further configured to return the detailed information of the to-be-managed physical resource object to the application system 101.

In a specific implementation, when the to-be-managed resource object is a to-be-managed physical resource object,
the processor 601 is specifically configured to obtain an FDN identifier of the to-be-managed physical resource object; and
the network interface 602 is specifically configured to return the FDN identifier of the to-be-managed physical resource object to the application system 101.

The processor is further configured to obtain a UUID of the to-be-managed physical resource object according to the FDN identifier of the to-be-managed physical resource object and the resource object identifier mapping relationship table, where the resource object identifier mapping relationship table includes a mapping relationship between the UUID of the to-be-managed physical resource object and the FDN identifier of the to-be-managed physical resource object, and the UUID of the to-be-managed physical resource object is used by the application system 101 to query detailed information of the to-be-managed physical resource object.

The network interface 602 is configured to: return the UUID of the to-be-managed physical resource object to the application system 101, and receive a fifth query request sent by the application system 101, where the fifth query request carries the UUID of the to-be-managed physical resource object, and is used to query the detailed information of the to-be-managed physical resource object.

The processor 601 is further configured to obtain the detailed information of the to-be-managed physical resource object by using the UUID of the to-be-managed physical resource object.

The network interface 602 is further configured to return the detailed information of the to-be-managed physical resource object to the application system 101.

In a specific implementation, the network interface 602 is further configured to receive a physical resource object information modification request sent by the application system 101, where the physical resource object information modification request carries the FDN identifier of the to-be-managed physical resource object and/or the UUID of the to-be-managed physical resource object, and is used to modify the detailed information of the to-be-managed physical resource object.

The processor 601 is further configured to modify the detailed information of the to-be-managed physical resource object by using the FDN identifier of the to-be-managed physical resource object and/or the UUID of the to-be-managed physical resource object.

In a specific implementation, the network interface 602 is configured to receive a physical resource object information deletion request sent by the application system 101, where the physical resource object information deletion request carries the FDN identifier of the to-be-managed physical resource object and/or the UUID of the to-be-managed physical resource object, and is used to delete the detailed information of the to-be-managed physical resource object.

The processor 601 is further configured to delete the detailed information of the to-be-managed physical resource object by using the FDN identifier of the to-be-managed physical resource object and/or the UUID of the to-be-managed physical resource object.

In this application, the processor 601 may be one or more central processing units (CPU). When the processor 601 is one CPU, the CPU may be a single-core CPU or may be a multicore CPU.

The network interface 602 may be a wired interface, for example, a fiber distributed data interface (FDDI) or a Gigabit Ethernet (GE) interface.

The memory 603 may be, but is not limited to, one or more of a random access memory (RAM), a ready-only memory (ROM), an electrically-erasable programmable ready-only memory (EPROM), a compact disc read-only memory (CD-ROM), a hard disk, or the like.

In another implementation provided in this application, the memory 603 is configured to store program instruction code, and the processor 601 is configured to execute the instruction code in the memory 603, to complete the methods in the embodiments corresponding to FIG. 2 to FIG. 8.

FIG. 9B is a schematic diagram of a hardware structure of an application system for managing a resource object in the SDN system shown in FIG. 1 according to an embodiment of this application. The application system is an application system 101 shown in FIG. 9B. The application system 101 is configured to perform the methods in the embodiments in FIG. 2 to FIG. 8.

An application system 101 for managing a resource object in a software-defined networking SDN system 100 is provided. The SDN system includes a management system 104, the application system 101, and a control system 102. The control system 102 uses a universally unique identifier UUID to identify a resource object. A resource object identifier mapping relationship table including a mapping relationship between an FDN identifier of a resource object and a UUID of the resource object is stored in the management system 104. The application system 101 may include a processor 701 and a network interface 702. The processor 701 and the network interface 702 communicate with each other by using a bus 704. The processor 701 communicates with the management system 104 and the control system 102 by using the network interface 702.

The processor 701 is configured to generate a first query request, where the first query request includes basic information of a to-be-managed resource object, and the first query request is used to obtain an FDN identifier of the to-be-managed resource object.

The network interface 702 is configured to send the first query request to the management system 104.

The network interface 702 is further configured to receive the FDN identifier of the to-be-managed resource object that is returned by the management system 104, where the FDN identifier of the to-be-managed resource object is stored in the resource object identifier mapping relationship table.

The processor 701 is configured to manage the to-be-managed resource object by using the FDN identifier of the to-be-managed resource object.

In the foregoing technical solution, the resource object identifier mapping relationship table is created in the management system, to store a mapping relationship between a UUID of a resource object and an FDN identifier of the resource object, so that the resource object in the SDN system can be managed by using the application system by slightly modifying a network management system in an existing network system and an application based on the network management system, thereby implementing smooth evolution of the existing network system to the SDN system. Further, when a user manages a resource object by using a management interface of the application system, visual resource object information can be presented to the user by using the management interface by obtaining an FDN identifier of the resource object, for the user to query basic index information of the resource object.

In a specific implementation, the network interface 702 is further configured to receive a UUID of the to-be-managed resource object that is obtained according to the FDN identifier of the to-be-managed resource object and the resource object identifier mapping relationship table and that is returned by the management system, where a mapping relationship between the UUID of the to-be-managed resource object and the FDN identifier of the to-be-managed resource object is stored and included in the resource object identifier mapping relationship table.

The UUID of the to-be-managed resource object is used by the application system to manage the to-be-managed resource object, which may specifically include: querying detailed information of the to-be-managed resource object, modifying detailed information of the to-be-managed resource object, or deleting detailed information of the to-be-managed resource object.

By means of this implementation, the user may further manage, for example, query, modify, or delete (refer to the following implementations), detailed information of the resource object in the SDN system by using the application system and by using the FDN identifier of the to-be-managed resource object, so as to strengthen management on a resource in the SDN system.

In a specific implementation, the network interface is further configured to send a second query request to the management system, where the second query request carries the FDN identifier of the to-be-managed resource object, and is used to obtain the UUID of the to-be-managed resource object.

In a specific implementation, when the to-be-managed resource object is a to-be-managed service resource object, the first query request is used to obtain an FDN identifier of the to-be-managed service resource object; and the FDN identifier of the to-be-managed resource object is the FDN identifier of the to-be-managed service resource object.

The processor 701 is further configured to generate the second query request, where the second query request is used to obtain a UUID of the to-be-managed service resource object, and the second query request carries the FDN identifier of the to-be-managed service resource object.

The network interface 702 is further configured to send the second query request to the control system 102.

The network interface 702 is further configured to receive the UUID of the to-be-managed service resource object that is found according to the resource object identifier mapping relationship table and that is returned by the management system 104. In a specific implementation, the processor 701 is further configured to generate a sixth query request, where the sixth query request carries the UUID of the to-be-managed service resource object, to query detailed information of the to-be-managed service resource object.

The network interface 702 is further configured to send the sixth query request to the control system 102.

The network interface is further configured to receive the detailed information of the to-be-managed service resource object that is returned by the control system 102.

In a specific implementation, when the detailed information of the to-be-managed service resource object includes a physical resource object using a UUID and associated with the to-be-managed service resource object,
the processor 701 is further configured to generate a third query request, where the third query request carries the UUID of the physical resource object associated with the to-be-managed service resource object, and is used to obtain an FDN identifier of the physical resource object associated with the to-be-managed service resource object; and
the network interface 702 is further configured to: send the third query request to the management system 104, and receive the FDN identifier of the physical resource object associated with the to-be-managed service resource object that is returned by the management system 104, where the FDN identifier of the physical resource object associated with the to-be-managed service resource object and the UUID of the physical resource object associated with the to-be-managed service resource object are stored in the resource object identifier mapping relationship table of the management system.

In a specific implementation, when the to-be-managed resource object is a to-be-managed service resource object, the first query request is used to obtain an FDN identifier of the to-be-managed service resource object; and the FDN identifier of the to-be-managed resource object is the FDN identifier of the to-be-managed service resource object.

The network interface 702 is further configured to send a second query request to the control system 102, where the second query request is used to obtain a UUID of the to-be-managed service resource object, and the second query request carries the FDN identifier of the to-be-managed service resource object.

The network interface 702 is further configured to receive the UUID of the to-be-managed service resource object that is found according to the resource object identifier mapping relationship table and that is returned by the management system 104.

The network interface 702 is further configured to send a service resource object information modification request to the control system 102, where the service resource object information modification request carries the UUID of the to-be-managed service resource object, to manage detailed information of the to-be-managed service resource object.

In a specific implementation, when the to-be-managed resource object is a to-be-managed service resource object, the first query request is used to obtain an FDN identifier of the to-be-managed service resource object; and the FDN identifier of the to-be-managed resource object is the FDN identifier of the to-be-managed service resource object.

The network interface 702 is further configured to send the second query request to the control system 102, where the second query request is used to obtain a UUID of the to-be-managed service resource object, and the second query request carries the FDN identifier of the to-be-managed service resource object.

The network interface 702 is further configured to receive the UUID of the to-be-managed service resource object that is found according to the resource object identifier mapping relationship table and that is returned by the management system 104.

The network interface 702 is further configured to send a service resource object information deletion request to the control system 102, where the service resource object information deletion request carries the UUID of the to-be-managed service resource object, to manage detailed information of the to-be-managed service resource object.

In a specific implementation, when the to-be-managed resource object is a physical resource object, the first query request is used to obtain an FDN identifier of the to-be-managed physical resource object; and the FDN identifier of the to-be-managed resource object is the FDN identifier of the to-be-managed physical resource object.

The network interface 702 is further configured to send a fourth query request to the management system 104, where the fourth query request carries the FDN identifier of the to-be-managed physical resource object, and is used to query detailed information of the to-be-managed physical resource object.

The network interface 702 is further configured to receive the detailed information of the to-be-managed physical resource object that is returned by the management system 104.

In a specific implementation, when the to-be-managed resource object is a physical resource object, the first query request is used to obtain an FDN identifier of the to-be-managed physical resource object; and the FDN identifier of the to-be-managed resource object is the FDN identifier of the to-be-managed physical resource object.

The processor 701 is further configured to generate a physical resource object information modification request, where the physical resource object information modification request carries the FDN identifier of the to-be-managed physical resource object, and is used to modify detailed information of the to-be-managed physical resource object.

The network interface 702 is further configured to send the physical resource object information modification request to the management system 104.

In a specific implementation, when the to-be-managed resource object is a physical resource object, the first query request is used to obtain an FDN identifier of the to-be-managed physical resource object; and the FDN identifier of the to-be-managed resource object is the FDN identifier of the to-be-managed physical resource object.

The processor 701 is further configured to generate a physical resource object information deletion request, where the physical resource object information deletion request carries the FDN identifier of the to-be-managed physical resource object, and is used to delete detailed information of the to-be-managed physical resource object.

The network interface 702 is further configured to send the physical resource object information deletion request to the management system.

In a specific implementation, when the to-be-managed resource object is a physical resource object, the network interface 702 is configured to send a second query request to the management system 104, where the second query request is used to obtain a UUID of the to-be-managed physical resource object, and the second query request carries an FDN identifier of the to-be-managed physical resource object.

The network interface 702 is configured to receive the UUID of the to-be-managed physical resource object that is found according to the resource object identifier mapping relationship table and that is returned by the management system 104.

In a specific implementation, the network interface 702 is further configured to send a fifth query request to the management system 104, where the fifth query request carries the UUID of the to-be-managed physical resource object, and is used to query detailed information of the to-be-managed physical resource object.

The network interface 702 is further configured to receive the detailed information of the to-be-managed physical resource object that is obtained by using the UUID of the to-be-managed physical resource object and that is returned by the management system 104.

In a specific implementation, the network interface 702 is further configured to send a physical resource object information modification request to the management system 104, where the physical resource object information modification request carries the UUID of the to-be-managed physical resource object, and is used to modify the detailed information of the to-be-managed physical resource object.

In a specific implementation, the network interface 702 is further configured to send a physical resource object information deletion request to the management system 104, where the physical resource object information deletion request carries the UUID of the to-be-managed physical resource object, and is used to delete the detailed information of the to-be-managed physical resource object.

In another specific implementation, as shown in FIG. 9B, the application system 101 may include the processor 701, the network interface 702, and a memory 703. The processor 701, the network interface 702, and the memory 703 communicate with each other by using a bus 704. The processor 701 communicates with the management system 104 and the control system 102 by using the network interface 702.

The memory 703 is configured to store program instruction code, and the processor 701 is configured to execute the instruction code in the memory 703, to complete the methods in the embodiments corresponding to FIG. 2 to FIG. 8.

The memory 703 may be, but is not limited to, one or more of a random access memory (RAM), a ready-only memory (ROM), an electrically-erasable programmable ready-only memory (EPROM), a compact disc read-only memory (CD-ROM), a hard disk, or the like. The memory 603 and the memory 703 are configured to store program code.

The processor 701 may be one or more central processing units (CPU). When the processor 701 is one CPU, the CPU may be a single-core CPU or may be a multi-core CPU.

The network interface 702 may be a wired interface, for example, a fiber distributed data interface (FDDI) or a Gigabit Ethernet (GE) interface.

According to the management system and the application system for managing a resource object in an SDN system provided in this application, a mapping relationship table including an FDN identifier and a UUID of a resource object is created in the management system, to store a mapping relationship between the UUID of the resource object and the FDN identifier of the resource object, so that the resource object in the SDN system can be managed by using the application system by slightly modifying an existing network management system and an application based on the network management system, thereby implementing smooth evolution of an existing network system to the future SDN system. Further, when a user manages a resource object by using a management interface of the application system, visual resource object information can be presented to the user by using the management interface by obtaining an FDN identifier of the resource object, for the user to query basic index information of the resource object. Further, the user can query, modify, or delete detailed information of the resource object by using the FDN identifier, to further manage the resource object.

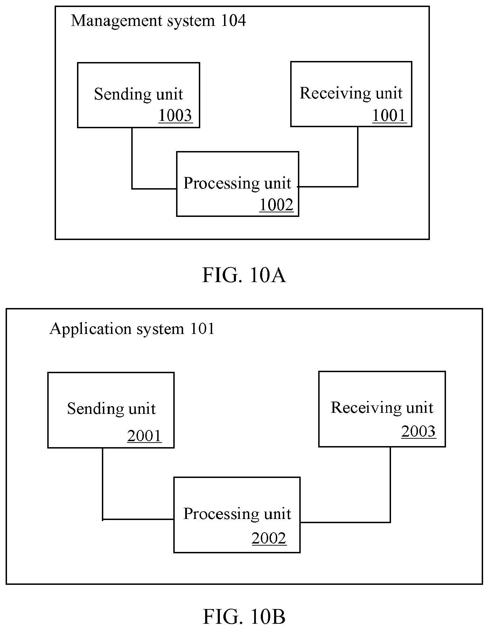

FIG. 10A is a schematic diagram of a management system for managing a resource object in the SDN system shown in FIG. 1 according to an embodiment of this application. The management system is a hardware device having functions of performing the methods in the embodiments shown in FIG. 2 to FIG. 8.

In a specific implementation, the management system for managing a resource object in an SDN system(the SDN system includes the management system, an application system, and a control system; and the control system 102 uses a universally unique identifier UUID to identify a resource object) includes a receiving unit 1001, a processing unit 1002, and a sending unit 1003.

The processing unit 1002 is configured to: obtain a UUID of a newly discovered resource object, generate a corresponding full distinguished name FDN identifier for the newly discovered resource object, and add a mapping relationship between the UUID of the newly discovered resource object and the FDN identifier of the newly discovered resource object to a resource object identifier mapping relationship table, where a mapping relationship between a UUID of a resource object and an FDN identifier of the resource object is stored in the resource object identifier mapping relationship table.

The receiving unit 1001 is configured to receive a first query request for a to-be-managed resource object that is sent by the application system 101, where the first query request includes basic information of the to-be-managed resource object, and the first query request is used to obtain an FDN identifier of the to-be-managed resource object.

The processing unit 1002 is further configured to obtain the FDN identifier of the to-be-managed resource object according to the basic information of the to-be-managed resource object.

The sending unit 1003 is configured to return the FDN identifier of the to-be-managed resource object to the application system 101.

In the foregoing technical solution, the resource object identifier mapping relationship table is created in the management system, to store a mapping relationship between a UUID of a resource object and an FDN identifier of the resource object, so that the resource object in the SDN system can be managed by using the application system by slightly modifying a network management system in an existing network system and an application based on the network management system, thereby implementing smooth evolution of the existing network system to the SDN system. Further, when a user manages a resource object by using a management interface of the application system, visual resource object information can be presented to the user by using the management interface by obtaining an FDN identifier of the resource object, for the user to query basic index information of the resource object.

In a specific implementation, when the newly discovered resource object is a newly discovered physical resource object,
the processing unit 1002 is configured to: allocate a UUID to the newly discovered physical resource object, generate a corresponding FDN identifier for the newly discovered physical resource object, and add a mapping relationship between the UUID of the newly discovered physical resource object and the FDN identifier of the newly discovered physical resource object to the resource object identifier mapping relationship table.

In a specific implementation, when the newly discovered resource object is a newly discovered physical resource object,
the receiving unit 1001 is configured to obtain a UUID of the newly discovered physical resource object from the control system 102; and
the processing unit 1002 is configured to: generate a corresponding FDN identifier for the newly discovered physical resource object, and add a mapping relationship between the UUID of the newly discovered physical resource object and the FDN identifier of the newly discovered physical resource object to the resource object identifier mapping relationship table.

In a specific implementation, when the newly discovered resource object is a service resource object, the processing unit 1002 is configured to: obtain a UUID of the service resource object from the control system 102, query the control system 102 for a corresponding service according to the UUID of the service resource object, generate an FDN identifier for the service resource object according to a query result, and add a mapping relationship between the UUID of the service resource object and the FDN identifier of the service resource object to the resource object identifier mapping relationship table.

In a specific implementation, the processing unit 1002 is further configured to obtain a UUID of the to-be-managed resource object according to the FDN identifier of the to-be-managed resource object and the resource object identifier mapping relationship table, where the resource object identifier mapping relationship table includes a mapping relationship between the UUID of the to-be-managed resource object and the FDN identifier of the to-be-managed resource object, and the UUID of the to-be-managed resource object is used by the application system 101 to index detailed information of the to-be-managed resource object.

The sending unit 1003 is configured to return the UUID of the to-be-managed resource object to the application system 101.

The UUID of the to-be-managed resource object is used by the application system to manage detailed information of the to-be-managed resource object, which may specifically include: querying the detailed information of the to-be-managed resource object, modifying the detailed information of the to-be-managed resource object, or deleting the detailed information of the to-be-managed resource object.

By means of this implementation, the user may further manage, for example, query, modify, or delete, detailed information of the resource object in the SDN system by using the application system and by using the FDN identifier, so as to strengthen management on a resource in the SDN system.

In a specific implementation, the receiving unit 1001 is further configured to receive a second query request sent by the application system 101, where the second query request is used to obtain the UUID of the to-be-managed resource object, and the second query request carries the FDN identifier of the to-be-managed resource object.

The processing unit 1002 further obtains the UUID of the to-be-managed resource object according to the FDN identifier of the to-be-managed resource object that is carried in the second query request.

In a specific implementation, when the detailed information of the to-be-managed resource object that needs to be queried is detailed information of a to-be-managed service resource object, and the detailed information of the to-be-managed service resource object includes a physical resource object using a UUID and associated with the to-be-managed service resource object,
the receiving unit 1001 is further configured to receive a third query request sent by the application system 101, where the third query request carries the UUID of the physical resource object associated with the to-be-managed service resource object, and is used to obtain an FDN identifier of the physical resource object associated with the to-be-managed service resource object;
the processing unit 1002 is further configured to query the resource object identifier mapping relationship table according to the UUID of the physical resource object associated with the to-be-managed service resource object, to obtain the FDN identifier of the physical resource object associated with the to-be-managed service resource object, where the resource object identifier mapping relationship table includes a mapping relationship between the UUID of the physical resource object associated with the to-be-managed service resource object and the FDN identifier of the physical resource object associated with the to-be-managed service resource object; and
the sending unit 1003 is further configured to return, to the application system 101, the FDN identifier of the physical resource object associated with the to-be-managed service resource object.

In a specific implementation, when the to-be-managed resource object is a to-be-managed physical resource object,
the processing unit 1002 is configured to obtain an FDN identifier of the to-be-managed physical resource object; and
the sending unit 1003 is configured to return the FDN identifier of the to-be-managed physical resource object to the application system 101.

The receiving unit 1001 is further configured to receive a fourth query request sent by the application system 101, where the fourth query request carries the FDN identifier of the to-be-managed physical resource object, and is used to query detailed information of the to-be-managed physical resource object;
the processing unit 1002 is further configured to query the detailed information of the to-be-managed physical resource object by using the FDN identifier of the to-be-managed physical resource object; and
the sending unit 1003 is further configured to return the detailed information of the to-be-managed physical resource object to the application system 101.

In a specific implementation, when the to-be-managed resource object is a to-be-managed physical resource object,
the processing unit 1002 is configured to obtain an FDN identifier of the to-be-managed physical resource object; and
the sending unit 1003 is configured to return the FDN identifier of the to-be-managed physical resource object to the application system 101.

The processing unit 1002 is further configured to obtain a UUID of the to-be-managed physical resource object according to the FDN identifier of the to-be-managed physical resource object and the resource object identifier mapping relationship table, where the resource object identifier mapping relationship table includes a mapping relationship between the UUID of the to-be-managed physical resource object and the FDN identifier of the to-be-managed physical resource object, and the UUID of the to-be-managed physical resource object is used by the application system 101 to query detailed information of the to-be-managed physical resource object.

The sending unit 1003 is configured to return the UUID of the to-be-managed physical resource object to the application system 101.

The receiving unit 1001 is further configured to receive a fifth query request sent by the application system 101, where the fifth query request carries the UUID of the to-be-managed physical resource object, and is used to query detailed information of the to-be-managed physical resource object.

The processing unit 1002 is further configured to obtain the detailed information of the to-be-managed physical resource object by using the UUID of the to-be-managed physical resource object.

The sending unit 1003 is further configured to return the detailed information of the to-be-managed physical resource object to the application system 101.

In a specific implementation, the receiving unit 1001 is further configured to receive a physical resource object information modification request sent by the application system 101, where the physical resource object information modification request carries the FDN identifier of the to-be-managed physical resource object and/or the UUID of the to-be-managed physical resource object, and is used to modify the detailed information of the to-be-managed physical resource object.

The processing unit 1002 is further configured to modify the detailed information of the to-be-managed physical resource object by using the FDN identifier of the to-be-managed physical resource object and/or the UUID of the to-be-managed physical resource object.

In a specific implementation, the receiving unit 1001 is configured to receive a physical resource object information deletion request sent by the application system 101, where the physical resource object information deletion request carries the FDN identifier of the to-be-managed physical resource object and/or the UUID of the to-be-managed physical resource object, and is used to delete the detailed information of the to-be-managed physical resource object.

The processing unit 1002 is further configured to delete the detailed information of the to-be-managed physical resource object by using the FDN identifier of the to-be-managed physical resource object and/or the UUID of the to-be-managed physical resource object.

FIG. 10B is a schematic diagram of an application system for managing a resource object in the SDN system shown in FIG. 1 according to an embodiment of this application. The application system is a hardware device having functions of performing the methods in the embodiments shown in FIG. 2 to FIG. 8.

In a specific implementation, the application system for managing a resource object in an SDN system(the SDN system includes a management system, the application system, and a control system; the control system uses a universally unique identifier UUID to identify a resource object; and a resource object identifier mapping relationship table including a mapping relationship between an FDN identifier of a resource object and a UUID of the resource object is stored in the management system 104) includes a sending unit 2001, a processing unit 2002, and a receiving unit 2003.

The processing unit 2002 is configured to generate a first query request, where the first query request includes basic information of a to-be-managed resource object, and the first query request is used to obtain an FDN identifier of the to-be-managed resource object.

The sending unit 2001 is configured to send the first query request to the management system 104.

The receiving unit 2003 is configured to receive the FDN identifier of the to-be-managed resource object that is returned by the management system 104, where the FDN identifier of the to-be-managed resource object is stored in the resource object identifier mapping relationship table.

The processing unit 2002 is configured to manage the to-be-managed resource object by using the FDN identifier of the to-be-managed resource object.

In the foregoing technical solution, the resource object identifier mapping relationship table is created in the management system, to store a mapping relationship between a UUID of a resource object and an FDN identifier of the resource object, so that the resource object in the SDN system can be managed by using the application system by slightly modifying a network management system in an existing network system and an application based on the network management system, thereby implementing smooth evolution of the existing network system to the SDN system. Further, when a user manages a resource object by using a management interface of the application system, visual resource object information can be presented to the user by using the management interface by obtaining an FDN identifier of the resource object, for the user to query basic index information of the resource object.

In a specific implementation, the receiving unit is further configured to receive a UUID of the to-be-managed resource object that is obtained according to the FDN identifier of the to-be-managed resource object and the resource object identifier mapping relationship table and that is returned by the management system, where a mapping relationship between the UUID of the to-be-managed resource object and the FDN identifier of the to-be-managed resource object is stored and included in the resource object identifier mapping relationship table.

The UUID of the to-be-managed resource object is used by the application system to manage detailed information of the to-be-managed resource object, which may specifically include: querying the detailed information of the to-be-managed resource object, modifying the detailed information of the to-be-managed resource object, or deleting the detailed information of the to-be-managed resource object.

By means of this implementation, the user may further manage, for example, query, modify, or delete (refer to the following implementations), detailed information of the resource object in the SDN system by using the application system and by using the FDN identifier of the to-be-managed resource object, so as to strengthen management on a resource in the SDN system.

In a specific implementation, the sending unit is further configured to send a second query request to the management system, where the second query request carries the FDN identifier of the to-be-managed resource object, and is used to obtain the UUID of the to-be-managed resource object.

In a specific implementation, when the to-be-managed resource object is a to-be-managed service resource object, the first query request is used to obtain an FDN identifier of the to-be-managed service resource object; and the FDN identifier of the to-be-managed resource object is the FDN identifier of the to-be-managed service resource object.

The processing unit 2002 is configured to generate the second query request, where the second query request is used to obtain a UUID of the to-be-managed service resource object, and the second query request carries the FDN identifier of the to-be-managed service resource object.

The sending unit 2001 is further configured to send the second query request to the control system 102.

The receiving unit 2003 is further configured to receive the UUID of the to-be-managed service resource object that is found according to the resource object identifier mapping relationship table and that is returned by the management system 104.

The processing unit 2002 is further configured to generate a sixth query request, where the sixth query request carries the UUID of the to-be-managed service resource object, to manage detailed information of the to-be-managed service resource object.

The sending unit 2001 is further configured to send the sixth query request to the control system 102.

The receiving unit 2003 is further configured to receive the detailed information of the to-be-managed service resource object that is returned by the control system 102.

In a specific implementation, when the detailed information of the to-be-managed service resource object includes a physical resource object using a UUID and associated with the to-be-managed service resource object,
the processing unit 2002 is further configured to generate a third query request, where the third query request carries the UUID of the physical resource object associated with the to-be-managed service resource object, and is used to obtain an FDN identifier of the physical resource object associated with the to-be-managed service resource object.

The sending unit 2001 is further configured to send the fourth query request to the management system 104.

The receiving unit 2003 is further configured to receive the FDN identifier of the physical resource object associated with the to-be-managed service resource object that is returned by the management system 104.

The FDN identifier of the physical resource object associated with the to-be-managed service resource object and the UUID of the physical resource object associated with the to-be-managed service resource object are stored in the resource object identifier mapping relationship table of the management system 104.

In a specific implementation, when the to-be-managed resource object is a to-be-managed service resource object, the first query request is used to obtain an FDN identifier of the to-be-managed service resource object; and the FDN identifier of the to-be-managed resource object is the FDN identifier of the to-be-managed service resource object.

The processing unit 2002 is further configured to generate the second query request, where the second query request is used to obtain a UUID of the to-be-managed service resource object, and the second query request carries the FDN identifier of the to-be-managed service resource object.

The sending unit 2001 is further configured to send the second query request to the control system 102.

The receiving unit 2003 is further configured to receive the UUID of the to-be-managed service resource object that is found according to the resource object identifier mapping relationship table and that is returned by the management system 104.

The processing unit 2002 is further configured to generate a service resource object information modification request, where the service resource object information modification request carries the UUID of the to-be-managed service resource object, to manage detailed information of the to-be-managed service resource object.

The sending unit 2001 is further configured to send the service resource object information modification request to the control system 102.

In a specific implementation, when the to-be-managed resource object is a to-be-managed service resource object,
the first query request is used to obtain an FDN identifier of the to-be-managed service resource object; and
the FDN identifier of the to-be-managed resource object is the FDN identifier of the to-be-managed service resource object.

The processing unit 2002 is further configured to generate the second query request, where the second query request is used to obtain a UUID of the to-be-managed service resource object, and the second query request carries the FDN identifier of the to-be-managed service resource object.

The sending unit 2001 is further configured to send the second query request to the control system 102.

The receiving unit 2003 is further configured to receive the UUID of the to-be-managed service resource object that is found according to the resource object identifier mapping relationship table and that is returned by the management system 104.

The processing unit 2002 is further configured to generate a service resource object information deletion request, where the service resource object information deletion request carries the UUID of the to-be-managed service resource object, to manage detailed information of the to-be-managed service resource object.

The sending unit 2001 is further configured to send the service resource object information deletion request to the control system 102.

In a specific implementation, when the to-be-managed resource object is a physical resource object,
the first query request is used to obtain an FDN identifier of the to-be-managed physical resource object; and
the FDN identifier of the to-be-managed resource object is the FDN identifier of the to-be-managed physical resource object.

The processing unit 2002 is further configured to generate a fourth query request, where the fourth query request carries the FDN identifier of the to-be-managed physical resource object, and is used to query detailed information of the to-be-managed physical resource object.

The sending unit 2001 is further configured to send the fourth query request to the management system 104.

The receiving unit 2003 is further configured to receive the detailed information of the to-be-managed physical resource object that is returned by the management system 104.

In a specific implementation, when the to-be-managed resource object is a physical resource object,
the first query request is used to obtain an FDN identifier of the to-be-managed physical resource object; and
the FDN identifier of the to-be-managed resource object is the FDN identifier of the to-be-managed physical resource object.

The processing unit 2002 is further configured to generate a physical resource object information modification request, where the physical resource object information modification request carries the FDN identifier of the to-be-managed physical resource object, and is used to modify detailed information of the to-be-managed physical resource object.

The sending unit 2001 is further configured to send the physical resource object information modification request to the management system 104.

In a specific implementation, when the to-be-managed resource object is a physical resource object,
the first query request is used to obtain an FDN identifier of the to-be-managed physical resource object; and
the FDN identifier of the to-be-managed resource object is the FDN identifier of the to-be-managed physical resource object.

The processing unit 2002 is further configured to generate a physical resource object information deletion request, where the physical resource object information deletion request carries the FDN identifier of the to-be-managed physical resource object, and is used to delete detailed information of the to-be-managed physical resource object.

The sending unit 2001 is further configured to send the physical resource object information deletion request to the management system 104.

In a specific implementation, when the to-be-managed resource object is a physical resource object, the first query request is used to obtain an FDN identifier of the to-be-managed physical resource object; and the FDN identifier of the to-be-managed resource object is the FDN identifier of the to-be-managed physical resource object.

The sending unit 2001 is configured to send a second query request to the management system 104, where the second query request is used to obtain a UUID of the to-be-managed physical resource object, and the second query request carries the FDN identifier of the to-be-managed physical resource object.

The receiving unit 2003 is configured to receive the UUID of the to-be-managed physical resource object that is found according to the resource object identifier mapping relationship table and that is returned by the management system 104.

The sending unit 2001 is further configured to send a fifth query request to the management system 104, where the fifth query request carries the UUID of the to-be-managed physical resource object, and is used to query detailed information of the to-be-managed physical resource object.

The receiving unit 2003 receives the detailed information of the to-be-managed physical resource object that is obtained by using the UUID of the to-be-managed physical resource object and that is returned by the management system.

In a specific implementation, when the to-be-managed resource object is a physical resource object, the first query request is used to obtain an FDN identifier of the to-be-managed physical resource object; and the FDN identifier of the to-be-managed resource object is the FDN identifier of the to-be-managed physical resource object.

The sending unit 2001 is configured to send a second query request to the management system 104, where the second query request is used to obtain a UUID of the to-be-managed physical resource object, and the second query request carries the FDN identifier of the to-be-managed physical resource object.

The receiving unit 2003 is configured to receive the UUID of the to-be-managed physical resource object that is found according to the resource object identifier mapping relationship table and that is returned by the management system 104.

The sending unit 2001 is further configured to send a physical resource object information modification request to the management system 104, where the physical resource object information modification request carries the UUID of the to-be-managed physical resource object, and is used to modify detailed information of the to-be-managed physical resource object.

In a specific implementation, when the to-be-managed resource object is a physical resource object, the first query request is used to obtain an FDN identifier of the to-be-managed physical resource object; and the FDN identifier of the to-be-managed resource object is the FDN identifier of the to-be-managed physical resource object.

The sending unit 2001 is configured to send a second query request to the management system 104, where the second query request is used to obtain a UUID of the to-be-managed physical resource object, and the second query request carries the FDN identifier of the to-be-managed physical resource object.

The receiving unit 2003 is configured to receive the UUID of the to-be-managed physical resource object that is found according to the resource object identifier mapping relationship table and that is returned by the management system 104.

The sending unit 2001 is further configured to send a physical resource object information deletion request to the management system 104, where the physical resource object information deletion request carries the UUID of the to-be-managed physical resource object, and is used to delete detailed information of the to-be-managed physical resource object.

It should be noted that, the management system embodiment provided in FIG. 10A and the application system embodiment provided in FIG. 10B are applied to the SDN system shown in FIG. 1, to implement functions of the management system and the application system. In a specific implementation, the processing unit 1002 in FIG. 10A may be implemented by the processor 601 in FIG. 9A; and one or more of the receiving unit 1001 or the sending unit 1003 may be implemented by the network interface 602 in FIG. 9A. Similarly, the processing unit 2002 in FIG. 10B may be implemented by the processor 701 in FIG. 9B; and one or more of the receiving unit 2003 or the sending unit 2001 may be implemented by the network interface 702 in FIG. 9B.

It should be noted that, in another implementation, steps implemented by the processing unit 1002 in FIG. 10A may be implemented by using hardware other than the processor, for example, a dedicated logic circuit, an application-specific integrated circuit (ASIC), or a field programmable gate array (FPGA), or may implemented by other hardware, or may be implemented by a combination of other hardware or firmware and a general purpose processor. A specific implementation is not limited in this application. Similarly, steps implemented by the processing unit 2002 in FIG. 10B may be implemented by hardware other than the processor. Refer to descriptions of the processing unit 1002 in FIG. 10A, and details are not described herein again.

The management system and the application system provided in the foregoing embodiments of this application are described by using only an example of division of the foregoing function modules. During actual application, the foregoing functions may be allocated to different function modules for implementation as required. That is, the internal structure of the device is divided into different function modules, so as to accomplish all or some of the functions in the foregoing descriptions. In addition, the foregoing multiple units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms. The units described as separate parts may or may not be physically separate, and parts displayed as units may or may not be physical units, may be located in one position, or may be distributed on a plurality of network units. Some or all of the units may be selected according to actual requirements to achieve the objectives of the solutions of the embodiments. In addition, functional units in the embodiments of this application may be integrated into one processing unit, or each of the units may exist alone physically, or two or more units are integrated into one unit.

An embodiment of this application further provides an SDN communications system, including a management system and an application system. The management system may be the management system provided in the embodiment corresponding to FIG. 9A or FIG. 10A. The application system may be the application system provided in the embodiment corresponding to FIG. 9B or FIG. 10B. The management system and the application system are configured to the methods in the embodiments corresponding to FIG. 2 to FIG. 8.

A person skilled in the art should be aware that in the foregoing one or more examples, functions described in this application may be implemented by hardware, software, firmware, or any combination thereof. When the present invention is implemented by software, the foregoing functions may be stored in a computer-readable medium or transmitted as one or more instructions or code in the computer-readable medium. The computer-readable medium includes a computer storage medium and a communications medium, where the communications medium includes any medium that enables a computer program to be transmitted from one place to another. The storage medium may be any available medium accessible to a general-purpose or dedicated computer.

The embodiments in this specification are all described in a progressive manner, for same or similar parts in the embodiments, refer to these embodiments, and each embodiment focuses on a difference from other embodiments. Especially, apparatus and system embodiments are basically similar to a method embodiment, and therefore are described briefly; for related parts, refer to partial descriptions in the method embodiment.

In summary, it should be noted that what is described above is merely example embodiments of the technical solutions of this application, but is not intended to limit the protection scope of this application. Obviously, a person skilled in the art can make various modifications and variations to this application without departing from the scope of this application. These modifications and variations shall all fall within the protection scope of this application provided that such modifications and variations made to this application fall within the scope of the appended claims.

## Claims

1. A method for managing a resource object in a software-defined networking, SDN, system, wherein the SDN system comprises a management system, an application system, and a control system; the control system uses a universally unique identifier, UUID, to identify a resource object; and the method comprises:
obtaining (201), by the management system, a UUID of a newly discovered resource object;
generating (202), by the management system, a corresponding full distinguished name, FDN, identifier for the newly discovered resource object;
adding (203), by the management system, a mapping relationship between the UUID of the newly discovered resource object and the FDN identifier of the newly discovered resource object to a resource object identifier mapping relationship table, wherein a mapping relationship between a UUID of the resource object and an FDN identifier of the resource object is stored in the resource object identifier mapping relationship table, wherein the management system further adds basic information of the newly discovered resource object to the mapping relationship between the UUID of the newly discovered resource object and the FDN identifier of the newly discovered resource object to generate a mapping relationship between the basic information of the newly discovered resource object, the UUID identifier of the newly discovered resource object, and the FDN identifier of the newly discovered resource object;
receiving (204), by the management system, a first query request for a to-be-managed resource object that is sent by the application system, wherein the first query request comprises basic information of the to-be-managed resource object, and the first query request is used to obtain an FDN identifier of the to-be-managed resource object;
obtaining (205), by the management system, the FDN identifier of the to-be-managed resource object according to the basic information of the to-be-managed resource object; and
returning (207), by the management system, the FDN identifier of the to-be-managed resource object to the application system.

2. The method according to claim 1, wherein when the newly discovered resource object is a newly discovered physical resource object,
the obtaining a UUID of a newly discovered resource object specifically comprises: newly discovering, by the management system, a physical resource object, and allocating a UUID to the newly discovered physical resource object;
the generating, by the management system, a corresponding FDN identifier for the newly discovered resource object specifically comprises: generating, by the management system, a corresponding FDN identifier for the newly discovered physical resource object; and
the adding, by the management system, a mapping relationship between the UUID of the newly discovered resource object and the FDN identifier of the newly discovered resource object to a resource object identifier mapping relationship table specifically comprises: adding, by the management system, a mapping relationship between the UUID of the newly discovered physical resource object and the FDN identifier of the newly discovered physical resource object to the resource object identifier mapping relationship table.

3. The method according to claim 1 or 2, wherein when the newly discovered resource object is a newly discovered service resource object,
the obtaining a UUID of a newly discovered resource object specifically comprises: obtaining, by the management system, a UUID of the newly discovered service resource object from the control system;
the generating, by the management system, a corresponding FDN identifier for the newly discovered resource object specifically comprises: querying, by the management system, the control system for a corresponding service according to the UUID of the newly discovered service resource object, and generating a corresponding FDN identifier for the newly discovered service resource object according to a query result; and
the adding, by the management system, a mapping relationship between the UUID of the newly discovered resource object and the FDN identifier of the newly discovered resource object to the resource object identifier mapping relationship table specifically comprises: adding, by the management system, a mapping relationship between the UUID of the newly discovered service resource object and the FDN identifier of the newly discovered service resource object to the resource object identifier mapping relationship table.

4. The method according to any one of claims 1 to 3, wherein the method further comprises:
obtaining, by the management system, a UUID of the to-be-managed resource object according to the FDN identifier of the to-be-managed resource object and the resource object identifier mapping relationship table, and returning the UUID of the to-be-managed resource object to the application system, wherein the resource object identifier mapping relationship table comprises a mapping relationship between the UUID of the to-be-managed resource object and the FDN identifier of the to-be-managed resource object, and the UUID of the to-be-managed resource object is used by the application system to manage detailed information of the to-be-managed resource object.

5. A method for managing a resource object in a software-defined networking, SDN, system, wherein the SDN system comprises a management system, an application system, and a control system; the control system uses a universally unique identifier, UUID, to identify a resource object; a resource object identifier mapping relationship table comprising a mapping relationship between an full distinguished name, FDN, identifier of the resource object and the UUID of the resource object is stored in the management system, wherein the management system further adds basic information of the resource object to the mapping relationship between the UUID of the resource object and the FDN identifier of the resource object to generate a mapping relationship between the basic information of the resource object, the UUID identifier of the resource object, and the FDN identifier of the resource object; and the method comprises:
sending (204'), by the application system, a first query request to the management system, wherein the first query request comprises basic information of a to-be-managed resource object, and the first query request is used to obtain an FDN identifier of the to-be-managed resource object;
receiving (205'), by the application system, the FDN identifier of the to-be-managed resource object that is returned by the management system according to the basic information of the to-be-managed resource object; and
managing, by the application system, the to-be-managed resource object by using the FDN identifier of the to-be-managed resource object.

6. The method according to claim 5, wherein the method further comprises:
receiving (207'), by the application system, a UUID of the to-be-managed resource object that is obtained according to the FDN identifier of the to-be-managed resource object and the resource object identifier mapping relationship table and that is returned by the management system.

7. The method according to claim6, wherein before the receiving, by the application system, a UUID of the to-be-managed resource object that is obtained according to the FDN identifier of the to-be-managed resource object and the resource object identifier mapping relationship table and that is returned by the management system, the method further comprises:
sending (206'), by the application system, a second query request to the management system, wherein the second query request is used to obtain the UUID of the to-be-managed resource object, and the second query request carries the FDN identifier of the to-be-managed resource object.

8. The method according to claim 6 or 7, wherein when the to-be-managed resource object is a to-be-managed service resource object, the FDN identifier of the to-be-managed resource object that is received by the application system is an FDN identifier of the to-be-managed service resource object, and the UUID of the to-be-managed resource object that is received by the application system is a UUID of the to-be-managed service resource object; and
the managing, by the application system, the to-be-managed resource object by using the FDN identifier of the to-be-managed resource object specifically comprises:
sending, by the application system, a sixth query request to the control system, wherein the sixth query request carries the UUID of the to-be-managed service resource object, to query detailed information of the to-be-managed service resource object; and
receiving, by the application system, the detailed information of the to-be-managed service resource object that is returned by the control system.

9. A management system for managing a resource object in a software-defined networking, SDN, system, wherein the SDN system comprises the management system, an application system, and a control system; the control system uses a universally unique identifier, UUID, to identify a resource object; and the management system comprises a receiving unit (1001), a processing unit (1002), and a sending unit (1003), wherein
the processing unit (1002) is configured to: obtain a UUID of a newly discovered resource object, generate a corresponding full distinguished name, FDN, identifier for the newly discovered resource object, and add a mapping relationship between the UUID of the newly discovered resource object and the FDN identifier of the newly discovered resource object to a resource object identifier mapping relationship table, wherein a mapping relationship between a UUID of a resource object and an FDN identifier of the resource object is stored in the resource object identifier mapping relationship table, wherein the management system further adds basic information of the newly discovered resource object to the mapping relationship between the UUID of the newly discovered resource object and the FDN identifier of the newly discovered resource object to generate a mapping relationship between the basic information of the newly discovered resource object, the UUID identifier of the newly discovered resource object, and the FDN identifier of the newly discovered resource object;
the receiving unit (1003) is configured to receive a first query request for a to-be-managed resource object that is sent by the application system, wherein the first query request comprises basic information of the to-be-managed resource object, and the first query request is used to obtain an FDN identifier of the to-be-managed resource object;
the processing unit (1002) is further configured to obtain the FDN identifier of the to-be-managed resource object according to the basic information of the to-be-managed resource object; and
the sending unit (1001) is configured to return the FDN identifier of the to-be-managed resource object to the application system.

10. The management system according to claim 9, wherein when the newly discovered resource object is a newly discovered physical resource object,
the processing unit (1002) is configured to: allocate a UUID to the newly discovered physical resource object, generate a corresponding FDN identifier for the newly discovered physical resource object, and add a mapping relationship between the UUID of the newly discovered physical resource object and the FDN identifier of the newly discovered physical resource object to the resource object identifier mapping relationship table.

11. The management system according to claim 9 or 10, wherein when the newly discovered resource object is a newly discovered service resource object, the processing unit (1002) is configured to: obtain a UUID of the newly discovered service resource object from the control system, query the control system for a corresponding service according to the UUID of the newly discovered service resource object, generate a corresponding FDN identifier for the newly discovered service resource object according to a query result, and add a mapping relationship between the UUID of the newly discovered service resource object and the FDN identifier of the newly discovered service resource object to the resource object identifier mapping relationship table.

12. The management system according to any one of claims 9 to 11, wherein the processing unit (1002) is further configured to: obtain a UUID of the to-be-managed resource object according to the FDN identifier of the to-be-managed resource object and the resource object identifier mapping relationship table, wherein the resource object identifier mapping relationship table comprises a mapping relationship between the UUID of the to-be-managed resource object and the FDN identifier of the to-be-managed resource object, and the UUID of the to-be-managed resource object is used by the application system to manage detailed information of the to-be-managed resource object; and
the sending unit (1001) is further configured to return the UUID of the to-be-managed resource object to the application system.

13. An application system for managing a resource object in a software-defined networking, SDN, system, wherein the SDN system comprises a management system, the application system, and a control system; the control system uses a universally unique identifier, UUID, to identify a resource object; a resource object identifier mapping relationship table comprising a mapping relationship between an full distinguished name, FDN, identifier of a resource object and a UUID of the resource object is stored in the management system, wherein the management system further adds basic information of the resource object to the mapping relationship between the UUID of the resource object and the FDN identifier of the resource object to generate a mapping relationship between the basic information of the resource object, the UUID identifier of the resource object, and the FDN identifier of the resource object; and the application system comprises a sending unit (2001), a processing unit (2002), and a receiving unit (2003), wherein
the sending unit (2001) is configured to send a first query request to the management system, wherein the first query request comprises basic information of a to-be-managed resource object, and the first query request is used to obtain an FDN identifier of the to-be-managed resource object;
the receiving unit (2003) is configured to receive the FDN identifier of the to-be-managed resource object that is returned by the management system according to the basic information of the to-be-managed resource object; and
the processing unit (2002) is configured to manage the to-be-managed resource object by using the FDN identifier of the to-be-managed resource object.

14. The application system according to claim 13, wherein
the receiving unit (2003) is further configured to receive a UUID of the to-be-managed resource object that is obtained according to the FDN identifier of the to-be-managed resource object and the resource object identifier mapping relationship table and that is returned by the management system.

15. The application system according to claim 14, wherein
the sending unit (2001) is further configured to send a second query request to the management system, wherein the second query request carries an FDN identifier of the to-be-managed resource object, and is used to obtain the UUID of the to-be-managed resource object.

16. The application system according to claim 14 or 15, wherein when the to-be-managed resource object is a to-be-managed service resource object,
the UUID of the to-be-managed resource object is a UUID of the to-be-managed service resource obj ect;
the sending unit (2001) is further configured to send a sixth query request to the control system, wherein the sixth query request carries the UUID of the to-be-managed service resource object, to query detailed information of the to-be-managed service resource object; and
the receiving unit (2003) is further configured to receive the detailed information of the to-be-managed service resource object that is returned by the control system.

17. A software-defined networking SDN communications system, comprising the management system according to any one of claims 9 to 12, and the application system according to any one of claims 13 to 16.p

## Patentansprüche

1. Verfahren zum Verwalten eines Ressourcenobjekts in einem softwaredefinierten *Netzwerk(software-defined networking* ― SDN)-System, wobei das SDN-System ein Verwaltungssystem, ein Anwendungssystem und ein Steuerungssystem umfasst; wobei das Steuerungssystem einen universell eindeutigen Bezeichner (*universally unique identifier ―* UUID) dazu verwendet, ein Ressourcenobjekt zu identifizieren; und wobei das Verfahren Folgendes umfasst:
Erhalten (201) eines UUID eines neu entdeckten Ressourcenobjekts durch das Verwaltungssystem;
Erzeugen (202) eines entsprechenden Bezeichners mit vollständig eindeutigem Namen (*full distinguished name ―* FDN), für das neu entdeckte Ressourcenobjekt durch das Verwaltungssystem;
Hinzufügen (203) einer Zuordnungsbeziehung zwischen dem UUID des neu entdeckten Ressourcenobjekts und dem FDN-Bezeichner des neu entdeckten Ressourcenobjekts zu einer Ressourcenobjektbezeichnerzuordnungsbeziehungstabelle durch das Verwaltungssystem, wobei eine Zuordnungsbeziehung zwischen einem UUID des Ressourcenobjekts und einem FDN-Bezeichner des Ressourcenobjekts in der Ressourcenobjektbezeichnerzuordnungsbeziehungstabelle gespeichert wird, wobei das Verwaltungssystem ferner Basisinformationen des neu entdeckten Ressourcenobjekts zu der Zuordnungsbeziehung zwischen dem UUID des neu entdeckten Ressourcenobjekts und dem FDN-Bezeichner des neu entdeckten Ressourcenobjekts hinzufügt, um eine Zuordnungsbeziehung zwischen den Basisinformationen des neu entdeckten Ressourcenobjekts, dem UUID-Bezeichner des neu entdeckten Ressourcenobjekts und dem FDN-Bezeichner des neu entdeckten Ressourcenobjekts zu erzeugen;
Empfangen (204) einer ersten Abfrageanforderung für ein zu verwaltendes Ressourcenobjekt, das durch das Anwendungssystem gesendet wird, durch das Verwaltungssystem, wobei die erste Abfrageanforderung Basisinformationen des zu verwaltenden Ressourcenobjekts umfasst und die erste Abfrageanforderung dazu verwendet wird, einen FDN-Bezeichner des zu verwaltenden Ressourcenobjekts zu erhalten;
Erhalten (205) des FDN-Bezeichners des zu verwaltenden Ressourcenobjekts durch das Verwaltungssystem gemäß den Basisinformationen des zu verwaltenden Ressourcenobjekts; und
Zurückgeben (207) des FDN-Bezeichners des zu verwaltenden Ressourcenobjekts an das Anwendungssystem durch das Verwaltungssystem.

2. Verfahren nach Anspruch 1, wobei, wenn das neu entdeckte Ressourcenobjekt ein neu entdecktes physisches Ressourcenobjekt ist,
das Erhalten eines UUID eines neu entdeckten Ressourcenobjekts speziell Folgendes umfasst: neu Entdecken eines physischen Ressourcenobjekts durch das Verwaltungssystem und Zuweisen eines UUID an das neu entdeckte physische Ressourcenobjekt;
wobei das Erzeugen eines entsprechenden FDN-Bezeichners für das neu entdeckte Ressourcenobjekt durch das Verwaltungssystem speziell Folgendes umfasst: Erzeugen eines entsprechenden FDN-Bezeichners für das neu entdeckte physische Ressourcenobjekt durch das Verwaltungssystem; und
wobei das Hinzufügen einer Zuordnungsbeziehung zwischen dem UUID des neu entdeckten Ressourcenobjekts und dem FDN-Bezeichner des neu entdeckten Ressourcenobjekts zu einer Ressourcenobjektbezeichnerzuordnungsbeziehungstabelle durch das Verwaltungssystem speziell Folgendes umfasst: Hinzufügen einer Zuordnungsbeziehung zwischen dem UUID des neu entdeckten physischen Ressourcenobjekts und dem FDN-Bezeichner des neu entdeckten physischen Ressourcenobjekts zu der Ressourcenobjektbezeichnerzuordnungsbeziehungstabelle durch das Verwaltungssystem.

3. Verfahren nach Anspruch 1 oder 2, wobei, wenn das neu entdeckte Ressourcenobjekt ein neu entdecktes Dienstressourcenobjekt ist, das Erhalten eines UUID eines neu entdeckten Ressourcenobjekts speziell Folgendes umfasst:
Erhalten eines UUID des neu entdeckten Dienstressourcenobjekts von dem Steuerungssystem durch das Verwaltungssystem;
wobei das Erzeugen eines entsprechenden FDN-Bezeichners für das neu entdeckte Ressourcenobjekt durch das Verwaltungssystem speziell Folgendes umfasst: Abfragen des Steuerungssystems nach einem entsprechenden Dienst gemäß dem UUID des neu entdeckten Dienstressourcenobjekts durch das Verwaltungssystem und Erzeugen eines entsprechenden FDN-Bezeichners für das neu entdeckte Dienstressourcenobjekt gemäß einem Abfrageergebnis; und
wobei das Hinzufügen einer Zuordnungsbeziehung zwischen dem UUID des neu entdeckten Ressourcenobjekts und dem FDN-Bezeichner des neu entdeckten Ressourcenobjekts zu der Ressourcenobjektbezeichnerzuordnungsbeziehungstabelle durch das Verwaltungssystem speziell Folgendes umfasst: Hinzufügen einer Zuordnungsbeziehung zwischen dem UUID des neu entdeckten Dienstressourcenobjekts und dem FDN-Bezeichner des neu entdeckten Dienstressourcenobjekts zu der Ressourcenobjektbezeichnerzuordnungsbeziehungstabelle durch das Verwaltungssystem.

4. Verfahren nach einem der Ansprüche 1 bis 3, wobei das Verfahren ferner Folgendes umfasst:
Erhalten eines UUID des zu verwaltenden Ressourcenobjekts durch das Verwaltungssystem gemäß dem FDN-Bezeichner des zu verwaltenden Ressourcenobjekts und der Ressourcenobjektbezeichnerzuordnungsbeziehungstabelle und Zurückgeben des UUID des zu verwaltenden Ressourcenobjekts an das Anwendungssystem, wobei die Ressourcenobjektbezeichnerzuordnungsbeziehungstabelle eine Zuordnungsbeziehung zwischen dem UUID des zu verwaltenden Ressourcenobjekts und dem FDN-Bezeichner des zu verwaltenden Ressourcenobjekts umfasst und der UUID des zu verwaltenden Ressourcenobjekts durch das Anwendungssystem dazu verwendet wird, Detailinformationen des zu verwaltenden Ressourcenobjekts zu verwalten.

5. Verfahren zum Verwalten eines Ressourcenobjekts in einem softwaredefinierten Netzwerk(SDN)-System, wobei das SDN-System ein Verwaltungssystem, ein Anwendungssystem und ein Steuerungssystem umfasst; wobei das Steuerungssystem einen universell eindeutigen Bezeichner (UUID) dazu verwendet, ein Ressourcenobjekt zu identifizieren; wobei eine Ressourcenobjektbezeichnerzuordnungsbeziehungstabelle, die eine Zuordnungsbeziehung zwischen einem Bezeichner mit vollständig eindeutigem Namen (FDN) des Ressourcenobjekts und dem UUID des Ressourcenobjekts umfasst, in dem Verwaltungssystem gespeichert wird, wobei das Verwaltungssystem ferner Basisinformationen des Ressourcenobjekts zu der Zuordnungsbeziehung zwischen dem UUID des Ressourcenobjekts und dem FDN-Bezeichner des Ressourcenobjekts hinzufügt, um eine Zuordnungsbeziehung zwischen den Basisinformationen des Ressourcenobjekts, dem UUID-Bezeichner des Ressourcenobjekts und dem FDN-Bezeichner des Ressourcenobjekts zu erzeugen; und wobei das Verfahren Folgendes umfasst:
Senden (204') einer ersten Abfrageanforderung an das Verwaltungssystem durch das Anwendungssystem, wobei die erste Abfrageanforderung Basisinformationen eines zu verwaltenden Ressourcenobjekts umfasst und die erste Abfrageanforderung dazu verwendet wird, einen FDN-Bezeichner des zu verwaltenden Ressourcenobjekts zu erhalten;
Empfangen (205') des FDN-Bezeichners des zu verwaltenden Ressourcenobjekts, der durch das Verwaltungssystem gemäß den Basisinformationen des zu verwaltenden Ressourcenobjekts zurückgegeben wird, durch das Anwendungssystem; und
Verwalten des zu verwaltenden Ressourcenobjekts unter Verwendung des FDN-Bezeichners des zu verwaltenden Ressourcenobjekts durch das Anwendungssystem.

6. Verfahren nach Anspruch 5, wobei das Verfahren ferner Folgendes umfasst:
Empfangen (207') eines UUID des zu verwaltenden Ressourcenobjekts, der gemäß dem FDN-Bezeichner des zu verwaltenden Ressourcenobjekts und der Ressourcenobjektbezeichnerzuordnungsbeziehungstabelle erhalten wird und der durch das Verwaltungssystem zurückgegeben wird, durch das Anwendungssystem.

7. Verfahren nach Anspruch 6, wobei vor dem Empfangen eines UUID des zu verwaltenden Ressourcenobjekts, der gemäß dem FDN-Bezeichner des zu verwaltenden Ressourcenobjekts und der Ressourcenobjektbezeichnerzuordnungsbeziehungstabelle erhalten wird und der durch das Verwaltungssystem zurückgegeben wird, durch das Anwendungssystem, das Verfahren ferner Folgendes umfasst:
Senden (206') einer zweiten Abfrageanforderung an das Verwaltungssystem durch das Anwendungssystem, wobei die zweite Abfrageanforderung dazu verwendet wird, den UUID des zu verwaltenden Ressourcenobjekts zu erhalten, und die zweite Abfrageanforderung den FDN-Bezeichner des zu verwaltenden Ressourcenobjekts trägt.

8. Verfahren nach Anspruch 6 oder 7, wobei, wenn das zu verwaltende Ressourcenobjekt ein zu verwaltendes Dienstressourcenobjekt ist, der FDN-Bezeichner des zu verwaltenden Ressourcenobjekts, der durch das Anwendungssystem empfangen wird, ein FDN-Bezeichner des zu verwaltenden Dienstressourcenobjekts ist und der UUID des zu verwaltenden Ressourcenobjekts, der durch das Anwendungssystem empfangen wird, ein UUID des zu verwaltenden Dienstressourcenobjekts ist; und
das Verwalten des zu verwaltenden Ressourcenobjekts durch das Anwendungssystem durch Verwenden des FDN-Bezeichners des zu verwaltenden Ressourcenobjekts speziell Folgendes umfasst:
Senden einer sechsten Abfrageanforderung an das Steuerungssystem durch das Anwendungssystem, wobei die sechste Abfrageanforderung den UUID des zu verwaltenden Dienstressourcenobjekts trägt, um Detailinformationen des zu verwaltenden Dienstressourcenobjekts abzufragen; und
Empfangen der Detailinformationen des zu verwaltenden Dienstressourcenobjekts, die durch das Steuerungssystem zurückgegeben werden, durch das Anwendungssystem.

9. Verwaltungssystem zum Verwalten eines Ressourcenobjekts in einem softwaredefinierten Netzwerk(SDN)-System, wobei das SDN-System das Verwaltungssystem, ein Anwendungssystem und ein Steuerungssystem umfasst; wobei das Steuerungssystem einen universell eindeutigen Bezeichner (UUID) dazu verwendet, ein Ressourcenobjekt zu identifizieren; und wobei das Verwaltungssystem eine Empfangseinheit (1001), eine Verarbeitungseinheit (1002) und eine Sendeeinheit (1003) umfasst,
wobei die Verarbeitungseinheit (1002) dazu konfiguriert ist, Folgendes durchzuführen: Erhalten eines UUID eines neu entdeckten Ressourcenobjekts, Erzeugen eines entsprechenden Bezeichners mit vollständig eindeutigem Namen (FDN) für das neu entdeckte Ressourcenobjekt und Hinzufügen einer Zuordnungsbeziehung zwischen dem UUID des neu entdeckten Ressourcenobjekts und dem FDN-Bezeichner des neu entdeckten Ressourcenobjekts zu einer Ressourcenobjektbezeichnerzuordnungsbeziehungstabelle, wobei eine Zuordnungsbeziehung zwischen einem UUID eines Ressourcenobjekts und einem FDN-Bezeichner des Ressourcenobjekts in der Ressourcenobjektbezeichnerzuordnungsbeziehungstabelle gespeichert wird, wobei das Verwaltungssystem ferner Basisinformationen des neu entdeckten Ressourcenobjekts zu der Zuordnungsbeziehung zwischen dem UUID des neu entdeckten Ressourcenobjekts und dem FDN-Bezeichner des neu entdeckten Ressourcenobjekts hinzufügt, um eine Zuordnungsbeziehung zwischen den Basisinformationen des neu entdeckten Ressourcenobjekts, dem UUID-Bezeichner des neu entdeckten Ressourcenobjekts und dem FDN-Bezeichner des neu entdeckten Ressourcenobjekts zu erzeugen;
wobei die Empfangseinheit (1003) dazu konfiguriert ist, eine erste Abfrageanforderung für ein zu verwaltendes Ressourcenobjekt zu empfangen, die durch das Anwendungssystem gesendet wird, wobei die erste Abfrageanforderung Basisinformationen des zu verwaltenden Ressourcenobjekts umfasst und die erste Abfrageanforderung dazu verwendet wird, einen FDN-Bezeichner des zu verwaltenden Ressourcenobjekts zu erhalten;
wobei die Verarbeitungseinheit (1002) ferner dazu konfiguriert ist, den FDN-Bezeichner des zu verwaltenden Ressourcenobjekts gemäß den Basisinformationen des zu verwaltenden Ressourcenobjekts zu erhalten; und
wobei die Sendeeinheit (1001) dazu konfiguriert ist, den FDN-Bezeichner des zu verwaltenden Ressourcenobjekts an das Anwendungssystem zurückzugeben.

10. Verwaltungssystem nach Anspruch 9, wobei, wenn das neu entdeckte Ressourcenobjekt ein neu entdecktes physisches Ressourcenobjekt ist,
die Verarbeitungseinheit (1002) dazu konfiguriert ist, Folgendes durchzuführen: Zuweisen eines UUID dem neu entdeckten physischen Ressourcenobjekt, Erzeugen eines entsprechenden FDN-Bezeichners für das neu entdeckte physische Ressourcenobjekt und Hinzufügen einer Zuordnungsbeziehung zwischen dem UUID des neu entdeckten physischen Ressourcenobjekts und dem FDN-Bezeichner des neu entdeckten physischen Ressourcenobjekts zu der Ressourcenobjektbezeichnerzuordnungsbeziehungstabelle.

11. Verwaltungssystem nach Anspruch 9 oder 10, wobei, wenn das neu entdeckte Ressourcenobjekt ein neu entdecktes Dienstressourcenobjekt ist, die Verarbeitungseinheit (1002) dazu konfiguriert ist, Folgendes durchzuführen: Erhalten eines UUID des neu entdeckten Dienstressourcenobjekts von dem Steuerungssystem, Abfragen des Steuerungssystems nach einem entsprechenden Dienst gemäß dem UUID des neu entdeckten Dienstressourcenobjekts, Erzeugen eines entsprechenden FDN-Bezeichners für das neu entdeckte Dienstressourcenobjekt gemäß einem Abfrageergebnis und Hinzufügen einer Zuordnungsbeziehung zwischen dem UUID des neu entdeckten Dienstressourcenobjekts und dem FDN-Bezeichner des neu entdeckten Dienstressourcenobjekts zu der Ressourcenobjektbezeichnerzuordnungsbeziehungstabelle.

12. Verwaltungssystem nach einem der Ansprüche 9 bis 11, wobei die Verarbeitungseinheit (1002) ferner dazu konfiguriert ist, Folgendes durchzuführen: Erhalten eines UUID des zu verwaltenden Ressourcenobjekts gemäß dem FDN-Bezeichner des zu verwaltenden Ressourcenobjekts und der Ressourcenobjektbezeichnerzuordnungsbeziehungstabelle, wobei die Ressourcenobjektbezeichnerzuordnungsbeziehungstabelle eine Zuordnungsbeziehung zwischen dem UUID des zu verwaltenden Ressourcenobjekts und dem FDN-Bezeichner des zu verwaltenden Ressourcenobjekts umfasst und der UUID des zu verwaltenden Ressourcenobjekts durch das Anwendungssystem dazu verwendet wird, Detailinformationen des zu verwaltenden Ressourcenobjekts zu verwalten; und
wobei die Sendeeinheit (1001) ferner dazu konfiguriert ist, den UUID des zu verwaltenden Ressourcenobjekts an das Anwendungssystem zurückzugeben.

13. Anwendungssystem zum Verwalten eines Ressourcenobjekts in einem softwaredefinierten Netzwerk(SDN)-System, wobei das SDN-System ein Verwaltungssystem, das Anwendungssystem und ein Steuerungssystem umfasst; wobei das Steuerungssystem einen universell eindeutigen Bezeichner (UUID) dazu verwendet, ein Ressourcenobjekt zu identifizieren; wobei eine Ressourcenobjektbezeichnerzuordnungsbeziehungstabelle, die eine Zuordnungsbeziehung zwischen einem Bezeichner mit vollständig eindeutigem Namen (FDN), einem Ressourcenobjekt und einem UUID des Ressourcenobjekts umfasst, in dem Verwaltungssystem gespeichert ist, wobei das Verwaltungssystem ferner Basisinformationen des Ressourcenobjekts zu der Zuordnungsbeziehung zwischen dem UUID des Ressourcenobjekts und dem FDN-Bezeichner des Ressourcenobjekts hinzufügt, um eine Zuordnungsbeziehung zwischen den Basisinformationen des Ressourcenobjekts, dem UUID-Bezeichner des Ressourcenobjekts und dem FDN-Bezeichner des Ressourcenobjekts zu erzeugen; und wobei das Anwendungssystem eine Sendeeinheit (2001), eine Verarbeitungseinheit (2002) und eine Empfangseinheit (2003) umfasst, wobei
die Sendeeinheit (2001) dazu konfiguriert ist, eine erste Abfrageanforderung an das Verwaltungssystem zu senden, wobei die erste Abfrageanforderung Basisinformationen eines zu verwaltenden Ressourcenobjekts umfasst und die erste Abfrageanforderung dazu verwendet wird, einen FDN-Bezeichner des zu verwaltenden Ressourcenobjekts zu erhalten;
wobei die Empfangseinheit (2003) dazu konfiguriert ist, den FDN-Bezeichner des zu verwaltenden Ressourcenobjekts, der durch das Verwaltungssystem gemäß den Basisinformationen des zu verwaltenden Ressourcenobjekts zurückgegeben wird, zu empfangen; und
wobei die Verarbeitungseinheit (2002) dazu konfiguriert ist, das zu verwaltende Ressourcenobjekt durch Verwenden des FDN-Bezeichners des zu verwaltenden Ressourcenobjekts zu verwalten.

14. Anwendungssystem nach Anspruch 13, wobei
die Empfangseinheit (2003) ferner dazu konfiguriert ist, einen UUID des zu verwaltenden Ressourcenobjekts zu empfangen, der gemäß dem FDN-Bezeichner des zu verwaltenden Ressourcenobjekts und der Ressourcenobjektbezeichnerzuordnungsbeziehungstabelle erhalten wird und der durch das Verwaltungssystem zurückgegeben wird.

15. Anwendungssystem nach Anspruch 14, wobei
die Sendeeinheit (2001) ferner dazu konfiguriert ist, eine zweite Abfrageanforderung an das Verwaltungssystem zu senden, wobei die zweite Abfrageanforderung einen FDN-Bezeichner des zu verwaltenden Ressourcenobjekts trägt und dazu verwendet wird, den UUID des zu verwaltenden Ressourcenobjekts zu erhalten.

16. Anwendungssystem nach Anspruch 14 oder 15, wobei, wenn das zu verwaltende Ressourcenobjekt ein zu verwaltendes Dienstressourcenobjekt ist,
der UUID des zu verwaltenden Ressourcenobjekts ein UUID des zu verwaltenden Dienstressourcenobjekts ist;
wobei die Sendeeinheit (2001) ferner dazu konfiguriert ist, eine sechste Abfrageanforderung an das Steuerungssystem zu senden, wobei die sechste Abfrageanforderung den UUID des zu verwaltenden Dienstressourcenobjekts trägt, um Detailinformationen des zu verwaltenden Dienstressourcenobjekts abzufragen; und
wobei die Empfangseinheit (2003) ferner dazu konfiguriert ist, die Detailinformationen des zu verwaltenden Dienstressourcenobjekts zu empfangen, die durch das Steuerungssystem zurückgegeben werden.

17. Softwaredefiniertes Netzwerk(SDN)-System, das das Verwaltungssystem nach einem der Ansprüche 9 bis 12 und das Anwendungssystem nach einem der Ansprüche 13 bis 16 umfasst.

## Revendications

1. Procédé destiné à gérer un objet ressource dans un système de mise en réseau défini par logiciel, SDN, dans lequel le système SDN comprend un système de gestion, un système d'application et un système de commande ; le système de commande utilise un identifiant unique universel, UUID, pour identifier un objet ressource ; et le procédé comprend :
l'obtention (201), par le système de gestion, d'un UUID d'un objet ressource nouvellement découvert ;
la génération (202), par le système de gestion, d'un identifiant de nom distinctif complet, FDN, correspondant pour l'objet ressource nouvellement découvert ;
l'ajout (203), par le système de gestion, d'une relation de mappage entre l'UUID de l'objet ressource nouvellement découvert et l'identifiant FDN de l'objet ressource nouvellement découvert à une table de relations de mappage d'identifiant d'objet ressource, dans lequel une relation de mappage entre un UUID de l'objet ressource et un identifiant FDN de l'objet ressource est stockée dans la table de relations de mappage d'identifiant d'objet ressource, dans lequel le système de gestion ajoute en outre des informations de base de l'objet ressource nouvellement découvert à la relation de mappage entre l'UUID de l'objet ressource nouvellement découvert et l'identifiant FDN de l'objet ressource nouvellement découvert pour générer une relation de mappage entre les informations de base de l'objet ressource nouvellement découvert, l'identifiant UUID de l'objet ressource nouvellement découvert, et l'identifiant FDN de l'objet ressource nouvellement découvert ;
la réception (204), par le système de gestion, d'une première demande d'interrogation pour un objet ressource à gérer qui est envoyé par le système d'application, dans lequel la première demande d'interrogation comprend des informations de base de l'objet ressource à gérer, et la première demande d'interrogation est utilisée pour obtenir un identifiant FDN de l'objet ressource à gérer ;
l'obtention (205), par le système de gestion, de l'identifiant FDN de l'objet ressource à gérer en fonction des informations de base de l'objet ressource à gérer ; et
le renvoi (207), par le système de gestion, de l'identifiant FDN de l'objet ressource à gérer au système d'application.

2. Procédé selon la revendication 1, dans lequel, lorsque l'objet ressource nouvellement découvert est un objet ressource physique nouvellement découvert,
l'obtention d'un UUID d'un objet ressource nouvellement découvert comprend spécifiquement : la découverte nouvelle, par le système de gestion, d'un objet ressource physique, et l'attribution d'un UUID à l'objet ressource physique nouvellement découvert ;
la génération, par le système de gestion, d'un identifiant FDN correspondant pour l'objet ressource nouvellement découvert comprend spécifiquement : la génération, par le système de gestion, d'un identifiant FDN correspondant pour l'objet ressource physique nouvellement découvert ; et
l'ajout, par le système de gestion, d'une relation de mappage entre l'UUID de l'objet ressource nouvellement découvert et l'identifiant FDN de l'objet ressource nouvellement découvert à une table de relations de mappage d'identifiant d'objet ressource comprend spécifiquement : l'ajout, par le système de gestion, d'une relation de mappage entre l'UUID de l'objet ressource physique nouvellement découvert et l'identifiant FDN de l'objet ressource physique nouvellement découvert à la table de relations de mappage d'identifiant d'objet ressource.

3. Procédé selon la revendication 1 ou 2, dans lequel, lorsque l'objet ressource nouvellement découvert est un objet ressource de service nouvellement découvert,
l'obtention d'un UUID d'un objet ressource nouvellement découvert comprend spécifiquement : l'obtention, par le système de gestion, d'un UUID de l'objet ressource de service nouvellement découvert provenant du système de commande ;
la génération, par le système de gestion, d'un identifiant FDN correspondant pour l'objet ressource nouvellement découvert comprend spécifiquement : l'interrogation, par le système de gestion, du système de commande pour un service correspondant en fonction de l'UUID de l'objet ressource de service nouvellement découvert, et la génération d'un identifiant FDN correspondant pour l'objet ressource de service nouvellement découvert en fonction d'un résultat d'interrogation ; et
l'ajout, par le système de gestion, d'une relation de mappage entre l'UUID de l'objet ressource nouvellement découvert et l'identifiant FDN de l'objet ressource nouvellement découvert à la table de relations de mappage d'identifiant d'objet ressource comprend spécifiquement : l'ajout, par le système de gestion, d'une relation de mappage entre l'UUID de l'objet ressource de service nouvellement découvert et l'identifiant FDN de l'objet ressource de service nouvellement découvert à la table de relations de mappage d'identifiant d'objet ressource.

4. Procédé selon l'une quelconque des revendications 1 à 3, dans lequel le procédé comprend en outre :
l'obtention, par le système de gestion, d'un UUID de l'objet ressource à gérer en fonction de l'identifiant FDN de l'objet ressource à gérer et de la table de relations de mappage d'identifiant d'objet ressource, et le renvoi de l'UUID de l'objet ressource à gérer au système d'application, dans lequel la table de relations de mappage d'identifiant d'objet ressource comprend une relation de mappage entre l'UUID de l'objet ressource à gérer et l'identifiant FDN de l'objet ressource à gérer, et l'UUID de l'objet ressource à gérer est utilisé par le système d'application pour gérer des informations détaillées de l'objet ressource à gérer.

5. Procédé destiné à gérer un objet ressource dans un système de mise en réseau défini par logiciel, SDN, dans lequel le système SDN comprend un système de gestion, un système d'application et un système de commande ; le système de commande utilise un identifiant unique universel, UUID, pour identifier un objet ressource ; une table de relations de mappage d'identifiant d'objet ressource comprenant une relation de mappage entre un identifiant de nom distinctif complet, FDN, de l'objet ressource et l'UUID de l'objet ressource est stocké dans le système de gestion, dans lequel le système de gestion ajoute en outre des informations de base de l'objet ressource à la relation de mappage entre l'UUID de l'objet ressource et l'identifiant FDN de l'objet ressource pour générer une relation de mappage entre les informations de base de l'objet ressource, l'identifiant UUID de l'objet ressource, et l'identifiant FDN de l'objet ressource ; et le procédé comprend :
l'envoi (204'), par le système d'application, d'une première demande d'interrogation au système de gestion, dans lequel la première demande d'interrogation comprend des informations de base d'un objet ressource à gérer, et la première demande d'interrogation est utilisée pour obtenir un identifiant FDN de l'objet ressource à gérer ;
la réception (205'), par le système d'application, de l'identifiant FDN de l'objet ressource à gérer qui est renvoyé par le système de gestion en fonction des informations de base de l'objet ressource à gérer ; et
la gestion, par le système d'application, de l'objet ressource à gérer au moyen de l'identifiant FDN de l'objet ressource à gérer.

6. Procédé selon la revendication 5, dans lequel le procédé comprend en outre :
la réception (207), par le système d'application, d'un UUID de l'objet ressource à gérer qui est obtenu en fonction de l'identifiant FDN de l'objet ressource à gérer et de la table de relations de mappage d'identifiant d'objet ressource et qui est renvoyé par le système de gestion.

7. Procédé selon la revendication 6, dans lequel, avant la réception, par le système d'application, d'un UUID de l'objet ressource à gérer qui est obtenu en fonction de l'identifiant FDN de l'objet ressource à gérer et de la table de relations de mappage d'identifiant d'objet ressource et qui est renvoyé par le système de gestion, le procédé comprenant en outre :
l'envoi (206'), par le système d'application, d'une seconde demande d'interrogation au système de gestion, dans lequel la seconde demande d'interrogation est utilisée pour obtenir l'UUID de l'objet ressource à gérer, et la seconde demande d'interrogation contient l'identifiant FDN de l'objet ressource à gérer.

8. Procédé selon la revendication 6 ou 7, dans lequel, lorsque l'objet ressource à gérer est un objet ressource de service à gérer, l'identifiant FDN de l'objet ressource à gérer qui est reçu par le système d'application est un identifiant FDN de l'objet ressource de service à gérer, et l'UUID de l'objet ressource à gérer qui est reçu par le système d'application est un UUID de l'objet ressource de service à gérer ; et
la gestion, par le système d'application, de l'objet ressource à gérer au moyen de l'identifiant FDN de l'objet ressource à gérer comprend spécifiquement :
l'envoi, par le système d'application, d'une sixième demande d'interrogation au système de commande, dans lequel la sixième demande d'interrogation contient l'UUID de l'objet ressource de service à gérer, pour interroger des informations détaillées de l'objet ressource de service à gérer ; et
la réception, par le système d'application, des informations détaillées de l'objet ressource de service à gérer qui est renvoyé par le système de commande.

9. Système de gestion pour gérer un objet ressource dans un système de mise en réseau défini par logiciel, SDN, dans lequel le système SDN comprend un système de gestion, un système d'application et un système de commande ; le système de commande utilise un identifiant unique universel, UUID, pour identifier un objet ressource ; et le système de gestion comprend une unité de réception (1001), une unité de traitement (1002) et une unité d'envoi (1003), dans lequel
l'unité de traitement (1002) est configurée pour: obtenir un UUID de l'objet ressource nouvellement découvert, générer un identifiant de nom distinctif complet, FDN, correspondant pour l'objet ressource nouvellement découvert, et ajouter une relation de mappage entre l'UUID de l'objet ressource nouvellement découvert et l'identifiant FDN de l'objet ressource nouvellement découvert à une table de relations de mappage d'identifiant d'objet ressource, dans lequel une relation de mappage entre un UUID d'un objet ressource et un identifiant FDN de l'objet ressource est stockée dans la table de relations de mappage d'identifiant d'objet ressource, dans lequel le système de gestion ajoute en outre des informations de base de l'objet ressource nouvellement découvert à la relation de mappage entre l'UUID de l'objet ressource nouvellement découvert et l'identifiant FDN de l'objet ressource nouvellement découvert pour générer une relation de mappage entre les informations de base de l'objet ressource nouvellement découvert, l'identifiant UUID de l'objet ressource nouvellement découvert, et l'identifiant FDN de l'objet ressource nouvellement découvert ;
l'unité de réception (1003) est configurée pour recevoir une première demande d'interrogation pour un objet ressource à gérer qui est envoyé par le système d'application, dans lequel la première demande d'interrogation comprend des informations de base de l'objet ressource à gérer, et la première demande d'interrogation est utilisée pour obtenir un identifiant FDN de l'objet ressource à gérer ;
l'unité de traitement (1002) est en outre configurée pour obtenir l'identifiant FDN de l'objet ressource à gérer en fonction des informations de base de l'objet ressource à gérer ; et
l'unité d'envoi (1001) est configurée pour renvoyer l'identifiant FDN de l'objet ressource à gérer au système d'application.

10. Système de gestion selon la revendication 9, dans lequel, lorsque l'objet ressource nouvellement découvert est un objet ressource physique nouvellement découvert,
l'unité de traitement (1002) est configurée pour: attribuer un UUID à l'objet ressource physique nouvellement découvert, générer un identifiant FDN correspondant pour l'objet ressource physique nouvellement découvert et ajouter une relation de mappage entre l'UUID de l'objet ressource physique nouvellement découvert et l'identifiant FDN de l'objet ressource physique nouvellement découvert à la table de relations de mappage d'identifiant d'objet ressource.

11. Système de gestion selon la revendication 9 ou 10, dans lequel, lorsque l'objet ressource nouvellement découvert est un objet ressource de service nouvellement découvert, l'unité de traitement (1002) est configurée pour : obtenir un UUID de l'objet ressource de service nouvellement découvert provenant du système de commande, interroger le système de commande pour un service correspondant en fonction de l'UUID de l'objet ressource de service nouvellement découvert, générer un identifiant FDN correspondant pour l'objet ressource de service nouvellement découvert en fonction d'un résultat d'interrogation, et ajouter une relation de mappage entre l'UUID de l'objet ressource de service nouvellement découvert et l'identifiant FDN de l'objet ressource de service nouvellement découvert à la table de relations de mappage d'identifiant d'objet ressource.

12. Système de gestion selon l'une quelconque des revendications 9 à 11, dans lequel l'unité de traitement (1002) est en outre configuré pour: obtenir un UUID de l'objet ressource à gérer en fonction de l'identifiant FDN de l'objet ressource à gérer et de la table de relations de mappage d'identifiant d'objet ressource, dans lequel la table de relations de mappage d'identifiant d'objet ressource comprend une relation de mappage entre l'UUID de l'objet ressource à gérer et l'identifiant FDN de l'objet ressource à gérer, et l'UUID de l'objet ressource à gérer est utilisé par le système d'application pour gérer des informations détaillées de l'objet ressource à gérer ; et
l'unité d'envoi (1001) est en outre configurée pour renvoyer l'UUID de l'objet ressource à gérer au système d'application.

13. Système d'application destiné à gérer un objet ressource dans un système de mise en réseau défini par logiciel, SDN, dans lequel le système SDN comprend un système de gestion, le système d'application et un système de commande ; le système de commande utilise un identifiant unique universel, UUID, pour identifier un objet ressource ; une table de relations de mappage d'identifiant d'objet ressource comprenant une relation de mappage entre un identifiant de nom distinctif complet, FDN, d'un objet ressource et un UUID de l'objet ressource est stocké dans le système de gestion, dans lequel le système de gestion ajoute en outre des informations de base de l'objet ressource à la relation de mappage entre l'UUID de l'objet ressource et l'identifiant FDN de l'objet ressource pour générer une relation de mappage entre les informations de base de l'objet ressource, l'identifiant UUID de l'objet ressource, et l'identifiant FDN de l'objet ressource ; et le système d'application comprend une unité d'envoi (2001), une unité de traitement (2002) et une unité de réception (2003), dans lequel
l'unité d'envoi (2001) est configurée pour envoyer une première demande d'interrogation au système de gestion, dans lequel la première demande d'interrogation comprend des informations de base d'un objet ressource à gérer, et la première demande d'interrogation est utilisée pour obtenir un identifiant FDN de l'objet ressource à gérer ;
l'unité de réception (2003) est configurée pour recevoir l'identifiant FDN de l'objet ressource à gérer qui est renvoyé par le système de gestion en fonction des informations de base de l'objet ressource à gérer ; et
l'unité de traitement (2002) est configurée pour gérer l'objet ressource à gérer au moyen de l'identifiant FDN de l'objet ressource à gérer.

14. Système d'application selon la revendication 13, dans lequel
l'unité de réception (2003) est en outre configurée pour recevoir un UUID de l'objet ressource à gérer qui est obtenu en fonction de l'identifiant FDN de l'objet ressource à gérer et de la table de relations de mappage d'identifiant d'objet ressource et qui est renvoyé par le système de gestion.

15. Système d'application selon la revendication 14, dans lequel
l'unité d'envoi (2001) est en outre configurée pour envoyer une seconde demande d'interrogation au système de gestion, dans lequel la seconde demande d'interrogation contient un identifiant FDN de l'objet ressource à gérer, et est utilisée pour obtenir l'UUID de l'objet ressource à gérer.

16. Système d'application selon la revendication 14 ou 15, dans lequel, lorsque l'objet ressource à gérer est un objet ressource de service à gérer,
l'UUID de l'objet ressource à gérer est un UUID de l'objet ressource de service à gérer ;
l'unité d'envoi (2001) est en outre configurée pour envoyer une sixième demande d'interrogation au système de commande, dans lequel la sixième demande d'interrogation contient l'UUID de l'objet ressource de service à gérer, pour interroger des informations détaillées de l'objet ressource de service à gérer ; et
l'unité de réception (2003) est en outre configurée pour recevoir les informations détaillées de l'objet ressource de service à gérer qui est renvoyé par le système de commande.

17. Système de communication de mise en réseau défini par logiciel SDN, comprenant le système de gestion selon l'une quelconque des revendications 9 à 12, et le système d'application selon l'une quelconque des revendications 13 à 16.
